(19) Europäisches Patentamt
European Patent Office
Office européen des brevets

(11) EP 4 032 950 A1

(12) EUROPEAN PATENT APPLICATION
published in accordance with Art. 153(4) EPC

(43) Date of publication:
**27.07.2022 Bulletin 2022/30**

(21) Application number: **20865538.1**

(22) Date of filing: **11.09.2020**

(51) International Patent Classification (IPC):
***C08K 5/17*** (2006.01) ***C08K 7/02*** (2006.01)
***C08L 81/02*** (2006.01) ***C08L 101/02*** (2006.01)
***C08J 5/04*** (2006.01) ***C08K 3/105*** (2018.01)
***C08K 3/11*** (2018.01) ***C08K 3/16*** (2006.01)
***C08K 3/24*** (2006.01)

(52) Cooperative Patent Classification (CPC):
**C08J 5/04; C08K 3/105; C08K 3/11; C08K 3/16; C08K 3/24; C08K 5/17; C08K 7/02; C08L 81/02; C08L 101/02**

(86) International application number:
**PCT/JP2020/034418**

(87) International publication number:
**WO 2021/054251 (25.03.2021 Gazette 2021/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.09.2019 JP 2019171871**
**24.04.2020 JP 2020077093**

(71) Applicant: **Toray Industries, Inc.**
**Tokyo, 103-8666 (JP)**

(72) Inventors:
- **MASUNAGA, Atsushi**
  **Nagoya-shi, Aichi 455-8502 (JP)**
- **HAYASHI, Shinya**
  **Nagoya-shi, Aichi 455-8502 (JP)**
- **ISHITAKE, Kenji**
  **Nagoya-shi, Aichi 455-8502 (JP)**
- **TOMIOKA, Nobuyuki**
  **Nagoya-shi, Aichi 455-8502 (JP)**

(74) Representative: **Hoefer & Partner Patentanwälte mbB**
**Pilgersheimer Straße 20**
**81543 München (DE)**

# (54) THERMOPLASTIC RESIN COMPOSITION, FIBER-REINFORCED RESIN SUBSTRATE, AND MOLDED ARTICLE

(57) The purpose of the present invention is to provide a thermoplastic resin composition having exceptional thermal stability and mechanical characteristics, a fiber-reinforced resin substrate, and a molded article obtained therefrom. In order to achieve the abovementioned purpose, an embodiment of the present invention has the structure described below. Specifically, a thermoplastic resin composition including a thermoplastic resin (A) having an electron-donating group, and a transition metal compound (B), wherein the transition metal compound (B) includes a nickel compound (B1) and a copper compound (B2), the complete decomposition temperature of the copper compound (B2) is 400°C or higher, and the copper compound (B2) has a nickel content of 0.001-4 parts by mass (inclusive) and a copper content of 0.001-4 parts by mass (inclusive) with respect to 100 parts by mass of the thermoplastic resin (A) having an electron-donating group.

EP 4 032 950 A1

## Description

TECHNICAL FIELD

The present invention relates to a thermoplastic resin composition, a fiber reinforced plastic base, and a molded article.

BACKGROUND ART

In recent years, in applications such as automobiles and aircraft, an ambient temperature of resins has increased with an increase in density and output of components. Therefore, highly heat-resistant resins typified by super engineering plastics are widely applied. The demand for super engineering plastics has been increasing in applications in fields where use conditions are extremely severe and as a substitute material for metals, and improvement in the heat stability and the mechanical properties has required.

As means for improving heat stability of a thermoplastic resin, Patent Document 1 discloses that a metal halide or metal carboxylate of metal selected from copper, nickel, tin, and cerium is blended in a blend of a polyphenyleneether resin and a polyamide resin, and thereby the thermoplastic resin is excellent in heat stability.

In addition, as a technique of using a nickel compound and a copper compound in combination with a thermoplastic resin, Patent Document 2 discloses that a thermoplastic resin composition excellent in moldability, design property, scratch resistance, and impact resistance is obtained by containing at least one additive element selected from cobalt, nickel, copper, and lead in a butadiene resin, and also discloses that nickel nitrate and copper nitrate are used in combination as examples.

Patent Document 3 discloses that when an aromatic amine compound is contained with respect to polyarylenesulfide and polyalkylene glycol, the heat stability is excellent.

PRIOR ART DOCUMENTS

PATENT DOCUMENTS

Patent Document 1: Japanese Patent Laid-open Publication No. 1-163262
Patent Document 2: Japanese Patent Laid-open Publication No. 2014-227367
Patent Document 3: Japanese Patent Laid-open Publication No. 6-207102

SUMMARY OF THE INVENTION

PROBLEMS TO BE SOLVED BY THE INVENTION

In the method proposed in Patent Document 1 to 3, a thermoplastic resin composition having high heat stability can be obtained, but there is a problem in the heat stability in a more severe environment, and particularly there is a problem in that the tensile breaking elongation after heating is significantly reduced.

An object of the present invention is to solve the problems in the related art and to provide a thermoplastic resin composition, a fiber reinforced plastic base, and a molded article thereof having excellent heat stability and mechanical properties.

SOLUTIONS TO THE PROBLEMS

The present invention has been achieved as a result of studying the solution of the problems in the related art described above as an object, and has the following configuration.

[1] A thermoplastic resin composition containing a thermoplastic resin (A) having an electron donating group and a transition metal compound (B), wherein the transition metal compound (B) includes a nickel compound (B1) and a copper compound (B2), the copper compound (B2) has a complete decomposition temperature of 400°C or higher, and a nickel content is 0.001 parts by mass or more and 4 parts by mass or less, and a copper content is 0.001 parts by mass or more and 4 parts by mass or less, based on 100 parts by mass of the thermoplastic resin (A) having an electron donating group.

[2] A thermoplastic resin composition containing a thermoplastic resin (A) having an electron donating group, a

transition metal compound (B), and an amine compound (C), wherein a melt viscosity retention rate of the thermoplastic resin (A) having an electron donating group is 90% or more and 7000% or less after being heated at a melting point +70°C for 30 minutes, the thermoplastic resin (A) having an electron donating group includes polyarylenesulfide (A1), the transition metal compound (B) includes a nickel compound (B1) or a copper compound (B2), the copper compound (B2) has a complete decomposition temperature of 400°C or higher, and a transition metal content is 0.001 parts by mass or more and 8 parts by mass or less with respect to 100 parts by mass of the polyarylenesulfide (A1), a content of the amine compound (C) is 0.01 parts by mass or more and 5 parts by mass or less.
[3] The thermoplastic resin composition according to [1] or [2], wherein the copper compound (B2) is copper halide.
[4] The thermoplastic resin composition according to [2] or [3], wherein the polyarylenesulfide (A1) in the thermoplastic resin composition has a COOH group blockade rate represented by Equation (I) of 30% or more.
[Equation 1]

$$\frac{X-Y}{X} \times 100 \ \ldots \ \ (\mathrm{I})$$

(wherein, X represents a carboxyl group content of the polyarylenesulfide (A1), and Y represents a carboxyl group content of the polyarylenesulfide (A1) in the thermoplastic resin composition)
[5] The thermoplastic resin composition according to any one of [2] to [4], wherein the amine compound (C) is a primary and/or secondary amine compound in which a molecular weight is 5000 or less and a boiling point is 200°C or higher.
[6] The thermoplastic resin composition according to any one of [1] to [5], containing a fibrous filler (D) which is 10 parts by mass or more and 400 parts by mass or less with respect to 100 parts by mass of the thermoplastic resin (A) having an electron donating group.
[7] A fiber reinforced plastic base obtained by impregnating a continuous fibrous filler (D) or a reinforcing fiber base in which a discontinuous fibrous filler (D) is dispersed with the thermoplastic resin composition according to any one of [1] to [5].
[8] A molded article obtained by molding the thermoplastic resin composition according to any one of [1] to [6] or the fiber reinforced plastic base according to [7].

## EFFECTS OF THE INVENTION

According to the present invention, it is possible to obtain a thermoplastic resin composition having excellent heat stability and mechanical properties.

## BRIEF DESCRIPTION OF THE DRAWINGS

Fig. 1 is a diagram illustrating a result of thermogravimetric analysis of copper (II) chloride anhydride (B2-1) under predetermined conditions.
Fig. 2 is a diagram illustrating a result of thermogravimetric analysis of copper (II) nitrate trihydrate (B'2-1) under predetermined conditions.
Fig. 3 is a schematic view in which fiber-reinforced resin molded bodies are welded to each other.
Fig. 4 is a schematic view of a molded article prepared for evaluation of formability used in examples of the present invention.

## EMBODIMENTS OF THE INVENTION

Hereinafter, embodiments of the present invention will be described in more detail.
According to a first aspect of the thermoplastic resin composition of the present invention, a thermoplastic resin composition contains a thermoplastic resin (A) having an electron donating group and a transition metal compound (B), wherein the transition metal compound (B) contains a nickel compound (B1) and a copper compound (B2).
According to a second aspect, the thermoplastic resin composition of the present invention contains a thermoplastic resin (A) having an electron donating group, a transition metal compound (B), and an amine compound (C), in which the thermoplastic resin (A) having an electron donating group includes polyarylenesulfide (A1), the transition metal compound (B) includes a nickel compound (B1) or a copper compound (B2), and the copper compound (B2) has a complete decomposition temperature of 400°C or higher.

< Thermoplastic resin (A) Having Electron Donating Group >

The thermoplastic resin (A) having an electron donating group (hereinafter, may be simply referred to as "thermoplastic resin (A)") included in the first aspect of the thermoplastic resin composition of the present invention is not particularly limited as long as it is a thermoplastic resin having an electron donating group described below.
The electron donating group is a substituent that donates electrons and increases the electron density in the surroundings, but the electron donating group in the present invention is limited to an electron donating group having excellent coordinate bond properties with the nickel compound (B1) and the copper compound (B2) having a complete decomposition temperature of 400°C or higher. Specifically, the electron donating group in the present invention is limited to an ether group, a sulfide group, a thiol group, an amino group, and an alkyl amino group, and may contain two or more of these groups.
The thermoplastic resin (A) having an electron donating group is not particularly limited as long as it is a thermoplastic resin having an ether group, a sulfide group, a thiol group, an amino group, or an alkyl amino group. Examples of the thermoplastic resin (A) having an electron donating group include polyamide, polyacetal, polyphenyleneether, polyaryletherketone, polyarylenesulfide, polyphenyl sulfone, polysulfone, polyamide imide, polyether sulfone, and polyether imide. Among these, polyamide, polyaryletherketone, polyarylenesulfide, polyphenyl sulfone, polysulfone, polyethersulfone, and polyetherimide are preferable, and polyamide, polyaryletherketone, and polyarylenesulfide are particularly preferable from the viewpoint of exhibiting a particularly excellent thermal stabilization effect.

< Nickel Compound (B1) >

The nickel compound included in the first aspect of the thermoplastic resin composition of the present invention is not particularly limited as long as it is a compound of nickel. Among transition metals, nickel has a small ionic radius and is easily coordinate-bonded.
Examples of the nickel compound (B1) include salts such as a carboxylate salt, a halide salt, a carbonate salt, a hydroxide salt, an oxide salt, a sulfide salt, an acethylacetonate complex salt, and an alkoxide salt of the nickel. Examples of the carboxylic acid include formic acid, acetic acid, propionic acid, butyric acid, stearic acid, lactic acid, oleic acid, benzoic acid, oxalic acid, malonic acid, succinic acid, glutaric acid, and adipic acid. Examples of the alkoxide include butoxide, propoxide, ethoxide, and methoxide. Among these, a halide salt is preferable from the viewpoint that electron acceptability is high and it is easy to coordinate bond to the thermoplastic resin (A). Examples of the halide salt of nickel include nickel chloride, nickel iodide, nickel bromide, and nickel fluoride. Among these, nickel chloride and nickel iodide are more preferable, and nickel iodide is still more preferable.
In the thermoplastic resin composition according to the first aspect of the present invention, the nickel content is 0.001 parts by mass or more and 4 parts by mass or less with respect to 100 parts by mass of the thermoplastic resin (A). The nickel content is preferably 0.01 parts by mass or more and 2 parts by mass or less, and more preferably 0.1 parts by mass or more and 1 part by mass or less. When the nickel content is less than 0.001 parts by mass, it is difficult to obtain an excellent thermal stabilization effect. In addition, when the nickel content is more than 4 parts by mass, aggregation of the nickel compound (B1) is likely to occur, and excellent thermal stabilization effect and mechanical properties cannot be obtained.
The nickel content in the thermoplastic resin composition of the present invention is quantitatively determined by performing ashification on the thermoplastic resin composition, thermally decomposing the ashificated matter with sulfuric acid and hydrofluoric acid, and then analyzing a constant solution obtained by dissolving the ashificated matter in dilute sulfuric acid or aqua regia using an ICP mass spectrometer and an ICP emission spectrophotometer.
The content of the thermoplastic resin (A) in the thermoplastic resin composition can be measured as follows. The thermoplastic resin composition is dissolved in a solvent in which the thermoplastic resin (A) is dissolved, insoluble components are filtered, and the dissolved components are precipitated and recovered with a poor solvent. It can be measured by qualitative quantitative analysis such as high performance liquid chromatography using a solvent in which the recovered product is dissolved.

< Copper Compound (B2) Having Complete Decomposition Temperature of 400°C or Higher >

The copper compound (B2) having a complete decomposition temperature of 400°C or higher (hereinafter, may be simply referred to as "copper compound (B2)") included in the first aspect of the thermoplastic resin composition according to the present invention is not particularly limited as long as it is a copper compound having a complete decomposition temperature of 400°C or higher as described below. Among transition metals, copper has a small ionic radius and is easily coordinate-bonded.
Examples of the copper compound (B2) include salts such as a carboxylate salt, a halide salt, a carbonate salt, a hydroxide salt, an oxide salt, a sulfide salt, an acethylacetonate complex salt, and an alkoxide salt of the copper.

Examples of the carboxylic acid include formic acid, acetic acid, propionic acid, butyric acid, stearic acid, lactic acid, oleic acid, benzoic acid, oxalic acid, malonic acid, succinic acid, glutaric acid, and adipic acid. Examples of the alkoxide include butoxide, propoxide, ethoxide, and methoxide. Among these, since the complete decomposition temperature is likely to be 400°C or higher, in the first aspect of the thermoplastic resin composition of the present invention, the copper compound (B2) is preferably copper halide. Examples of the halide salt of copper include copper chloride, copper iodide, copper bromide, and copper fluoride. Among these, copper chloride and copper iodide are more preferable, and copper iodide is still more preferable.

The complete decomposition temperature of the copper compound (B2) is 400°C or higher. The complete decomposition temperature refers to a temperature at which substantially most parts of the compound except for the copper in the copper compound is desorbed or completely decomposed from the copper. This temperature can be measured by a method in which a small amount of a copper compound is weighed into a container, and a mass change is measured while the temperature is raised at a constant rate in an inert gas atmosphere using a thermogravimetric analysis device. A weight loss rate can be measured while the temperature of the copper compound is raised under a nitrogen atmosphere, and the complete decomposition temperature is defined as a temperature at which the weight loss does not proceed any more. As the temperature at which the weight loss does not proceed any more, a temperature at which a weight loss rate reaches 90% of the weight of the compound component excluding the copper of the copper compound is used for determination of the complete decomposition temperature.

When the complete decomposition temperature of the copper compound (B2) is 400°C or higher, even when the thermoplastic resin composition of the present invention is heated at a high temperature of lower than 400°C, the ligand of the copper compound (B2) is not desorbed, and copper is not reduced, so that the copper compound remains as a monovalent or divalent copper compound. This monovalent or divalent copper compound has electron acceptability, and can receive and coordinate electrons of the electron donating group of the thermoplastic resin (A).

On the other hand, when the thermoplastic resin (A) contains, instead of the copper compound (B2) having a copper content of 0.001 parts by mass or more and 4 parts by mass or less with respect to 100 parts by mass of the thermoplastic resin, a copper compound (B'2) having a similar copper content and a complete decomposition temperature of lower than 400°C (hereinafter, may be simply referred to as "(B'2) copper compound"), the ligand of the copper compound (B'2) is desorbed and copper is reduced depending on the temperature at which the thermoplastic resin composition is heated, so that the thermoplastic resin composition becomes zero-valent copper. This zero-valent copper has an electron donating property, but has a lower coordination ability than that of nickel, and thus has poor coordination binding property to the thermoplastic resin.

In the thermoplastic resin composition according to the first aspect of the present invention, the copper content is 0.001 parts by mass or more and 4 parts by mass or less with respect to 100 parts by mass of the thermoplastic resin (A). The copper content is preferably 0.01 parts by mass or more and 2 parts by mass or less, and more preferably 0.1 parts by mass or more and 1 part by mass or less. When the copper content is less than 0.001 parts by mass, it is difficult to obtain an excellent thermal stabilization effect. In addition, when the copper content is more than 4 parts by mass, aggregation of the copper compound (B2) is likely to occur, and excellent thermal stabilization effect and mechanical properties cannot be obtained.

In the first aspect of the thermoplastic resin composition of the present invention, the total content of the thermoplastic resin (A), nickel, and copper is preferably 20% by mass or more and 100% by mass or less, and more preferably 30% by mass or more and 100% by mass or less.

The copper content in the thermoplastic resin composition of the present invention is quantitatively determined by performing ashification on the thermoplastic resin composition, thermally decomposing the ashificated matter with sulfuric acid and hydrofluoric acid, and then analyzing a constant solution obtained by dissolving the ashificated matter in dilute sulfuric acid or aqua regia using an ICP mass spectrometer and an ICP emission spectrophotometer.

The reason why the first aspect of the thermoplastic resin composition of the present invention exhibits excellent heat stability and mechanical properties is not necessarily clear, but is presumed as follows. When the thermoplastic resin (A) is heated at a temperature equal to or higher than the melting point in the presence of oxygen, active peroxide radicals are generated, and a crosslinking or decomposition reaction excessively proceeds from the peroxide radical as a starting point. Therefore, the heat stability is poor, and the mechanical properties are also poor. Here, it is presumed that when nickel and copper having high coordinative bonding ability are coordinated to the electron donating group of the thermoplastic resin, generation of peroxide radicals can be suppressed, and a thermoplastic resin composition excellent in suppression of crosslinking or decomposition, that is, the heat stability and the mechanical properties can be obtained. In addition, it is presumed that when nickel and copper are coordinated to the electron donating group of the thermoplastic resin (A), the molecular chains are connected by a coordinate bond, and a properly crosslinked thermoplastic resin can be obtained, and the mechanical properties can be further improved.

Even when either the nickel compound (B1) or the copper compound (B2) is contained in the thermoplastic resin (A), a thermal stabilization effect can be obtained, but when the thermoplastic resin (A) contains the nickel compound (B1) and the copper compound (B2) at a specific ratio, a thermoplastic resin composition having remarkably excellent

heat stability and mechanical properties can be obtained.

According to a second aspect, the thermoplastic resin composition of the present invention contains a thermoplastic resin (A) having an electron donating group, a transition metal compound (B), and an amine compound (C), in which the thermoplastic resin (A) having an electron donating group includes polyarylenesulfide (A1), the transition metal compound (B) includes a nickel compound (B1) or a copper compound (B2), and the copper compound (B2) has a complete decomposition temperature of 400°C or higher.

< Polyarylenesulfide (A1) >

In the present invention, the polyarylenesulfide (A1) is a polymer containing preferably 90 mol% or more, more preferably 95 mol% or more of the repeat unit represented by General Formula (II). When the content of the repeat unit is less than 90 mol%, the heat resistance is impaired, which is not preferable.

[Chem. 1]

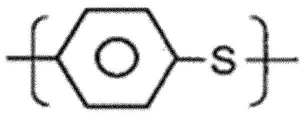

· · · (II)

Typical examples of the polyarylenesulfide (A1) include polyarylenesulfide, polyarylenesulfide sulfone, polyarylenesulfide ketone, random copolymers thereof, and block copolymers thereof. Two or more of these may be blended. Among these, polyphenylene sulfide containing 80 mol% or more of units derived from p-phenylene sulfide in all repeat units is more preferable, and polyphenylene sulfide containing 90 mol% or more of units derived from p-phenylene sulfide is still more preferable.

A method for producing the polyarylenesulfide (A1) is not particularly limited, and examples thereof include a method for allowing a dichloroaromatic compound and a sulfidating agent to react with each other in an organic polar solvent, a method for heating cyclic polyarylene sulfide to be converted into polyarylenesulfide, and a method for allowing a diiodo aromatic compound and sulfur alone to be melted and to react with each other. A posttreatment of the polyarylenesulfide obtained by these methods is not particularly limited, and a treatment of removing an oligomer component by washing with a solvent, a treatment of reducing a solvent and a gas component by heating, degassing, or the like, a treatment of crosslinking under an oxygen atmosphere, a treatment of melting the obtained polyarylenesulfide again to perform an additional reaction, or the like may be performed.

In the present invention, the polyarylenesulfide (A1) has a carboxyl group capable of reacting with the amine compound (C) described later.

< Transition Metal Compound (B) >

The transition metal compound (B) included in the second aspect of the thermoplastic resin composition of the present invention contains a nickel compound (B1) or a copper compound (B2). In the second aspect of the thermoplastic resin composition of the present invention, the nickel compound (B1) or the copper compound (B2) is alternatively selected as the transition metal compound (B), and both are not used in combination.

In the second aspect of the thermoplastic resin composition of the present invention, the transition metal content is 0.001 parts by mass or more and 8 parts by mass or less with respect to 100 parts by mass of the polyarylenesulfide (A1). The transition metal content is preferably 0.001 parts by mass or more and 4 parts by mass or less, and more preferably 0.006 parts by mass or more and 1 part by mass or less. When the transition metal content is less than 0.001 parts by mass with respect to 100 parts by mass of the polyarylenesulfide (A1), it is difficult to obtain an excellent thermal stabilization effect. In addition, when the transition metal content is more than 8 parts by mass, aggregation of the transition metal is likely to occur, and excellent thermal stabilization effect and mechanical properties cannot be obtained. Here, the transition metal content in the thermoplastic resin composition corresponds to the content of transition metal ions in the transition metal compound (B), and is measured by ICP mass spectrometry or ICP emission spectrometry as follows.

The transition metal content in the thermoplastic resin composition of the present invention is quantitatively determined by performing ashification on the thermoplastic resin composition, thermally decomposing the ashificated matter with sulfuric acid and hydrofluoric acid, and then analyzing a constant solution obtained by dissolving the ashificated matter in dilute sulfuric acid or aqua regia using an ICP mass spectrometer and an ICP emission spectrophotometer.

< Nickel Compound (B1) >

The nickel compound (B1) included in the second aspect of the thermoplastic resin composition of the present invention is the same as the nickel compound (B1) included in the first aspect. The complete decomposition temperature of the nickel compound (B1) is desirably equal to or higher than the melting point of the polyarylenesulfide (A1). The complete decomposition temperature is particularly preferably 350°C or higher. When the temperature is 350°C or higher, even when the thermoplastic resin composition is heated at a high temperature of lower than 350°C, the ligand of the nickel compound (B1) is not desorbed, and nickel is not reduced, so that 1 to 3 valent nickel compounds remain. The 1 to 3 valent nickel compounds have high electron acceptability, and easily receive and coordinate an electron of the electron donating group at the terminal of the polyarylenesulfide (A1).

< Copper compound (B2) >

The copper compound (B2) included in the second aspect of the thermoplastic resin composition of the present invention refers to the same compound as the copper compound (B2) used in the first aspect.

< Amine compound (C) >

The amine compound included in the second aspect of the thermoplastic resin composition of the present invention is not particularly limited as long as it reacts with the carboxyl group of the polyarylenesulfide (A1), and is preferably a primary or/and secondary amine compound having a molecular weight of 5000 or less and a boiling point of 200°C or higher. The boiling point is more preferably 300°C or higher. In the present invention, the boiling point refers to a boiling point under 1 atm.

When the molecular weight is 5000 or less, the reactivity of the polyarylenesulfide (A1) with a carboxyl group is improved, and when the boiling point is 200°C or higher, preferably 300°C or higher, volatilization can be suppressed at the processing temperature of the polyarylenesulfide (A1), so that excellent heat stability and mechanical properties can be obtained. The primary and/or secondary amine is preferable because it has reactivity with the carboxyl group of the polyarylenesulfide (A1). The primary and/or secondary amine compound refers to an amine compound having a primary amino group and/or a secondary amino group in one amine compound. Specific examples thereof include o-phenylenediamine (boiling point: 252°C/primary amine), p-phenylenediamine (boiling point: 267°C/primary amine), 1,5-diaminonaphthalene (boiling point: 210°C/primary amine), more preferably carbazole (boiling point: 354°C/secondary amine), 4,4-diphenylcarbazole (boiling point: 575°C/secondary amine), and phenothiazine (boiling point: 379°C/secondary amine).

In the second aspect of the thermoplastic resin composition of the present invention, the content of the amine compound (C) is 0.01 parts by mass or more and 5 parts by mass or less with respect to 100 parts by mass of the polyarylenesulfide (A1). The content of amine compound (C) is preferably 0.5 parts by mass or more and 3 parts by mass or less. When the content of the amine compound (C) is less than 0.01 parts by mass with respect to 100 parts by mass of the polyarylenesulfide (A1), it is difficult to obtain an excellent thermal stabilization effect. When the content of the amine compound (C) is more than 5 parts by mass, an excessive amount of unreacted amine with respect to the polyarylenesulfide (A1) is present in a large amount, which may lead to deterioration of the heat stability.

In the second aspect of the thermoplastic resin composition of the present invention, the total content of the polyarylenesulfide (A1), the transition metal, and the amine compound (C) is preferably 20% by mass or more and 100% or less, and more preferably 30% by mass or more and 100% by mass or less.

The content of the amine compound (C) in the thermoplastic resin composition of the present invention is measured as follows. The thermoplastic resin composition is dissolved in a solvent in which the polyarylenesulfide (A1) and the amine compound (C) are dissolved, for example, chloronaphthalene or the like, an insoluble component is filtered, and the soluble component is precipitated and recovered with a poor solvent. The polyarylenesulfide (A1) as a recovered product and the amine compound (C) reacting with the polyarylenesulfide (A1) are measured by quantitative qualitative analysis such as FT-IR, and the unreacted amine compound (C) dissolved in a poor solvent is measured by the quantitative qualitative analysis such as high performance liquid chromatography.

The reason why the thermoplastic resin composition of the second aspect of the thermoplastic resin composition of the present invention exhibits excellent heat stability and mechanical properties is not necessarily clear, but is presumed as follows.

When the polyarylenesulfide (A1) is heated at a temperature equal to or higher than the melting point in the presence of oxygen, the carboxyl group is subjected to cyclization decomposition to generate an active peroxide radical, and a crosslinking or decomposition reaction excessively proceeds from the peroxide radical as a starting point. Therefore, the heat stability is poor, and the mechanical properties are also poor. Here, it is presumed that the generation of peroxide radicals can be suppressed, and a thermoplastic resin composition excellent in suppression of crosslinking or decomposition, that is, heat stability and mechanical properties can be obtained by reacting the amine compound (C) to modify the carboxyl group, and further coordinating the transition metal compound (B) having high coordinative bonding ability to the electron donating group of the polyarylenesulfide (A1).

In addition, since the transition metal compound (B) also serves as an amidation reaction promoting catalyst between the carboxyl group of the polyarylenesulfide (A1) and the amine compound (C), it is presumed that the heat stability and the mechanical properties can be further improved by increasing the reaction rate.

In the second aspect of the thermoplastic resin composition of the present invention, the melt viscosity retention rate of the thermoplastic resin (A) having an electron donating group after heating at the melting point + 70°C for 30 minutes is 90% or more and 7000% or less. When the melt viscosity retention rate is less than 90%, the main chain of the polyarylenesulfide (A1) is decomposed, and the mechanical properties are deteriorated. In addition, when the melt viscosity retention rate is more than 7000%, crosslinking due to thermal deterioration excessively proceeds, and the mechanical properties are deteriorated. As means for setting the melt viscosity retention rate to 90% or more and 7000% or less, a method for adding the transition metal compound (B) and the primary and/or secondary amine compound (C) having a boiling point of 200°C or higher to the thermoplastic resin (A) having an electron donating group can be preferably used.

In the second aspect of the thermoplastic resin composition of the present invention, the polyarylenesulfide (A1) in the thermoplastic resin composition preferably has a COOH group blockade rate represented by Equation (I) of 30% or more. When the content is 30% or more, generation of peroxide radicals can be suppressed, and an excellent thermal stabilization effect can be obtained. Here, X represents a carboxyl group content of the polyarylenesulfide (A1), and Y represents a carboxyl group content of the polyarylenesulfide (A1) in the thermoplastic resin composition.

[Equation 2]

$$\frac{X-Y}{X} \times 100 \quad \ldots \quad (\mathrm{I})$$

The carboxyl group content in the polyarylenesulfide (A1) or the polyarylenesulfide (A1) in the thermoplastic resin composition is determined by performing FT-IR measurement on an amorphous film obtained by melt pressing, and calculating the amount from an absorption peak derived from carboxyl groups.

< Fibrous Filler (D) >

The thermoplastic resin composition of the present invention preferably contains a fibrous filler (D) which is 10 parts by mass or more and 400 parts by mass or less with respect to 100 parts by mass of the thermoplastic resin (A) having an electron donating group. By containing the fibrous filler (D), the mechanical properties can be further improved.

Examples of the fibrous filler (D) include glass fiber, carbon fiber, aramid fiber, polyamide fiber, polyester fiber, vinylon fiber, cotton, hemp fiber, kenaf fiber, bamboo fiber, rayon, steel fiber, and aluminum fiber. Among these, glass fibers and carbon fibers are preferable, and carbon fibers are more preferable from the viewpoint of having high affinity with a thermoplastic resin and further improving mechanical properties.

Examples of the shape of these fibrous fillers (D) include shapes of continuous fibers, short fibers such as chopped strands, and whiskers.

As described above, the content of the fibrous filler (D) in the thermoplastic resin composition is preferably 10 parts by mass or more and 400 parts by mass or less with respect to 100 parts by mass of the thermoplastic resin (A). When the content is 10 parts by mass or more, the mechanical properties of the thermoplastic resin composition can be improved. In addition, when the content is 400 parts by mass or less, molding processability is unlikely to be deteriorated.

The content of the fibrous filler (D) can be measured as follows. Insoluble components of the thermoplastic resin composition (A) are filtered using a solvent in which the thermoplastic resin is dissolved, and the fibrous filler (D) and the transition metal compound (B) are recovered as filtered products. Furthermore, the transition metal compound (B) is dissolved by a solvent and then removed, the fibrous filler is recovered, and the mass after washing is measured.

< Fiber Reinforced Plastic Base >

The fiber reinforced plastic base of the present invention is obtained by impregnating a continuous fibrous filler (D) or a reinforcing fiber base in which a discontinuous fibrous filler (D) is dispersed with the thermoplastic resin composition of the present invention.

That is, as the fiber reinforced plastic base of the present invention, the following two aspects can be mentioned. A first aspect of the fiber reinforced plastic base of the present invention is obtained by impregnating a continuous fibrous filler (D) with the thermoplastic resin composition of the present invention. A second aspect of the fiber reinforced plastic

base of the present invention is obtained by impregnating a reinforcing fiber base in which a discontinuous fibrous filler (D) is dispersed with the thermoplastic resin composition of the present invention.

The continuous fibrous filler (D) in the first aspect refers to a fiber reinforced plastic base in which the reinforced fibers are not interrupted. Examples of the form and arrangement of the continuous fibrous filler (D) include those aligned in one direction, textile (cloths), knitting, braid, and tow. Among them, it is preferable that the continuous fibrous filler (D) is arranged in one direction because the mechanical properties in a specific direction can be efficiently enhanced.

The reinforcing fiber base in which the discontinuous fibrous filler (D) is dispersed in the second aspect refers to a mat-like material in which the fibrous filler is cut and dispersed in the fiber reinforced plastic base. The reinforcing fiber base can be obtained by any method such as a wet process in which fibers are dispersed in a solution and then produced into a sheet, or a dry process using a carding device or an airlaid device. From the viewpoint of productivity, a dry process using a carding device or an airlaid device is preferable. The number average fiber length of the discontinuous fibrous filler (D) in the reinforcing fiber base is preferably 3 to 100 mm. When the number average fiber length of the discontinuous fibers is 3 mm or more, the reinforcing effect by the discontinuous fibers is sufficiently exhibited, and the mechanical strength of the resulting fiber reinforced plastic base can be further improved. The number average fiber length of the discontinuous fibers is more preferably 5 mm or more. On the other hand, when the number average fiber length of the discontinuous fibers is 100 mm or less, the fluidity at the time of molding can be further improved. The number average fiber length of the discontinuous fibers is more preferably 50 mm or less, and still more preferably 30 mm or less.

The number average fiber length of the discontinuous fibers can be determined by the following method. First, a sample of 100 mm × 100 mm is cut out from the fiber reinforced plastic base, and the cut sample is heated in an electric furnace at 600°C for 1.5 hours to burn off a matrix resin. From the fiber reinforced plastic base thus obtained, 400 discontinuous reinforcing fiber bundles are randomly collected. The fiber length of the discontinuous reinforcing fiber bundle taken out is measured in units of 1 mm using a caliper, and the number average fiber length (Ln) can be calculated from the following formula.

$$Ln = \Sigma Li/400$$

(Li: Measured fiber length (i = 1, 2, 3, ... 400) (unit: mm)).

The number average fiber length of the discontinuous fibers can be adjusted to the above range by cutting the fibers to a desired length at the time of producing the reinforcing fiber base. The orientation of the discontinuous fiber mat is not particularly limited, and is preferably isotropically dispersed from the viewpoint of moldability.

Examples of the method for impregnating the continuous fibrous filler (D) with the thermoplastic resin composition, in the first aspect, include a film method in which a film-shaped thermoplastic resin composition is melted and pressed to impregnate a reinforcing fiber bundle with a thermoplastic resin composition, a commingle process in which after blended spinning a fibrous thermoplastic resin composition with a reinforcing fiber bundle, the fibrous thermoplastic resin composition is melted and pressed to impregnate the reinforcing fiber bundle with the fibrous thermoplastic resin composition, a fiber impregnation method in which a powdered thermoplastic resin composition is dispersed in a gap between fibers in a reinforcing fiber bundle and then the powdered thermoplastic resin composition is melted and pressed to impregnate the reinforcing fiber bundle with the thermoplastic resin composition, and a melt impregnation method in which a reinforcing fiber bundle is immersed in a molten thermoplastic resin composition and pressed to impregnate the reinforcing fiber bundle with the thermoplastic resin composition. The melt impregnation method is preferable because various kinds of fiber reinforced plastic bases having various thicknesses and fiber volume contents can be produced.

Examples of the method for impregnating the reinforcing fiber base in which the discontinuous fibrous filler (D) is dispersed with the thermoplastic resin composition, in the second aspect, include a method in which a thermoplastic resin composition is supplied by an extruder to impregnate the reinforcing fiber base with the thermoplastic resin composition, a method in which a powdery thermoplastic resin composition is dispersed in a fiber layer of a reinforcing fiber base and melted, a method in which a thermoplastic resin composition is formed into a film and laminated to a reinforcing fiber base, a method in which a solvent is volatilized after the thermoplastic resin composition is dissolved in a solvent and the reinforcing fiber base is impregnated with the thermoplastic resin composition in a state of a solution, a method in which the thermoplastic resin composition is formed into a fiber and a mixed yarn with a discontinuous fiber, and a method in which the polyaryletherketone nonwoven fabric is laminated using a meltblow non-woven fabric.

Further, in the fiber reinforced plastic base of the present invention, a desired impregnation property can be selected according to the use and purpose thereof. Examples thereof include a prepreg having a higher impregnation property, a semi-impregnated semipreg, and a fabric having a low impregnation property. In general, a molded article having a higher impregnation property is preferable because a molded article having excellent dynamic characteristics can be obtained by molding in a short time.

The fiber reinforced plastic base impregnated with the thermoplastic resin composition of the present invention has excellent heat stability, and therefore has excellent bond strength when the fiber reinforced plastic bases are bonded to each other. As a factor of this, it is considered that the fiber reinforced plastic bases are heated in an oxygen atmosphere at the time of bonding the fiber reinforced plastic bases to each other, but oxidative deterioration on the surface of the bases can be suppressed, so that the bond strength is excellent.

< Molded Article >

The molded article of the present invention is obtained by molding the thermoplastic resin composition of the present invention or the fiber reinforced plastic base of the present invention.

< Method for Producing Thermoplastic Resin Composition >

The method for producing the thermoplastic resin composition of the present invention is not particularly limited, and for example, in the first aspect, the thermoplastic resin (A), the nickel compound (B1), and the copper compound (B2) are dry-blended, and supplied from an extruder main feeder. In the second aspect, the polyarylenesulfide (A1), the nickel compound (B1) or the copper compound (B2), and the amine compound (C) are dry-blended and supplied from an extruder main feeder. Further, a method for supplying the fibrous filler (D) from a side feeder of the extruder as necessary and melt-kneading the fibrous filler (D) at a temperature equal to or higher than the melting point of the thermoplastic resin (A) is preferable.

< Method for Molding Thermoplastic Resin Composition >

The method for molding a thermoplastic resin composition of the present invention is not particularly limited, and examples thereof include methods such as injection molding, extrusion molding, and compression molding. By such molding methods, a molded product such as a molded article, a sheet, or a film can be obtained.

Examples of other molding methods include a press molding in which a material obtained by stacking the fiber reinforced plastic base impregnated with the thermoplastic resin composition in an optional configuration is heated and pressed, an autoclave molding in which the fiber reinforced plastic base is charged into an autoclave and heated and pressed, a bagging molding in which the inside of the film or the like is wrapped under reduced pressure and heated in an oven while being pressed at atmospheric pressure, and a wrapping tape method in which a tape is wound while applying tension and heated in an oven.

As the press molding, it is possible to employ a hot press method in which a fiber reinforced plastic base is placed in advance in a mold, pressed and heated together with moldtightening, and then the fiber reinforced plastic base is cooled by cooling the mold while the moldtightening is performed to obtain a molded article, or a stamping molding in which the fiber reinforced plastic base is heated in advance to a temperature equal to or higher than the melting temperature of a thermoplastic resin by a heating device such as a far infrared heater, a heating plate, a high temperature oven, or induction heating, and the thermoplastic resin is placed on a mold to be the lower surface of the molding mold in a state of being melted and softened, and then the mold is closed to perform moldtightening, followed by press-cooling. The press molding is not particularly limited, and is preferably stamping molding from the viewpoint of accelerating the molding cycle and enhancing productivity.

< Other Components >

In the thermoplastic resin composition of the present invention, an inorganic filler other than a fibrous filler such as titanium oxide or calcium carbonate, an antioxidant, a heat stabilizer, a UV absorber, a colorant, and the like can also be added as desired.

< Application Example Of Molded Article >

The molded article obtained from the thermoplastic resin composition of the present invention include applications for electronic components such as a connector, a coil, a sensor, a LED lamp, a socket, a resistor, a relay case, a small switch, a coil bobbin, a capacitor, a variable condenser case, an optical pickup, an oscillator, various terminal boards, a transformer, a plug, a printed circuit board, a tuner, a speaker, a microphone, a headphone, a small motor, a magnetic head base, a power module, a semiconductor, a LCD, a FDD carriage, a FDD chassis, a motor brush holder, a parabolic antenna, and a computer related part; applications for electrical equipment parts such as a generator, a motor, a transformer, a current transformer, a voltage regulator, a rectifier, an inverter, a relay, a power contact, a switch, a circuit breaker, a knife switch, a multipole rod, and an electrical component cabinet; home and office electrical product

parts applications such as a VTR part, a TV part, an iron, a hair dryer, a rice cooker part, a microwave oven part, an acoustic part, an audio/laserdisc (registered trademark)/compact disc, an audio/video equipment part such as DVDs, a lighting part, a refrigerator part, an air conditioner part, a typewriter part, and a word processor part; machine-related parts applications such as an office computer related part, a telephone equipment related part, a facsimile related part, a copier-related part, a cleaning jig, a motor part, a lighter, and a typewriter; precision machine-related parts applications such as optical equipment such as a microscope, a binocular, a camera, and a watch; automotive/vehicle-related parts applications such as an alternator terminal, an alternator connector, an IC regulator, a potency meter base for light deer, various valves such as an exhaust gas valve, fuel-related exhaust system intake system various pipes, an air intake nozzle snorkel, an intake manifold, a fuel pump, an engine cooling water joint, a carburetor main body, a carburetor spacer, an exhaust gas sensor, a cooling water sensor, an oil temperature sensor, a brake pad wear sensor, a throttle position sensor, a crankshaft position sensor, an air flow meter, a brake pad wear sensor, a thermostat base for air conditioner, a heating hot air flow control valve, a brush holder for radiator motor, a water pump impeller, a turbine vane, a wiper motor related part, a distributor, starter switch, a starter relay, a transmission wire harness, a window washer nozzle, an air conditioner panel switch board, a fuel-related electromagnetic valve coil, a fuse connector, a horn terminal, an electrical component insulation plate, a step motor rotor, a lamp socket, a lamp reflector, a lamp housing, a brake piston, a solenoid bobbin, an engine oil filter, and an igniter case; and various aerospace applications.

[Examples]

Hereinafter, the present invention will be described with reference to examples, but the present invention is not limited by these examples. Various resins, additives, and the like used in examples and comparative examples are described below.

< Thermoplastic resin (A) Having Electron Donating Group >

(A-1) Polyphenylene sulfide (Reference Example 1, melting point: 280°C)
(A-2) Polyetheretherketone ("Victrex (registered trademark)" 90 G produced by Victrex plc, melting point: 343°C)
(A-3) Polyamide 66 ("Amilan (registered trademark)" CM 3001 produced by Toray Industries, Inc., melting point: 260°C)

(Reference Example 1)

8.27 kg (70.00 mol) of 47.5% sodium hydrosulfide, 2.94 kg (70.63 mol) of 96% sodium hydroxide, 11.45 kg (115.50 mol) of N-methyl-2-pyrrolidone (NMP), 1.89 kg (23.1 mol) of sodium acetate, and 5.50 kg of ion-exchanged water were charged into a 70 liter autoclave with a stirrer and a bottom valve, and gradually heated to 245°C over about 3 hours while nitrogen was passed at normal pressure, 9.77 kg of water and 0.28 kg of NMP were distilled off, and then a reaction vessel was cooled to 200°C. The amount of water remaining in the system per 1 mol of the charged amount of the alkali metal sulfide was 1.06 mol including water consumed for hydrolysis of NMP. The scattered amount of hydrogen sulfide was 0.02 mol per 1 mol of the charged amount of alkali metal sulfide.

The reaction vessel was cooled to 200°C, 10.42 kg (70.86 mol) of p-dichlorobenzene and 9.37 kg (94.50 mol) of NMP were then added, the reaction vessel was sealed under nitrogen gas, the temperature was raised from 200°C to 270°C at a rate of 0.6°C/min with stirring at 240 rpm, and the reaction was carried out at 270°C for 140 minutes. Thereafter, 2.40 kg (133 mol) of water was press-fitted while cooling from 270°C to 250°C over 15 minutes. Then, the mixture was gradually cooled from 250°C to 220°C over 75 minutes, and then rapidly cooled to around room temperature, and the contents were taken out.

The contents were diluted with about 35 liters of NMP, stirred as a slurry at 85°C for 30 minutes, and then filtered off with a 80 mesh wire gauze (opening: 0.175 mm) to obtain a solid. The obtained solid was washed with about 35 liters of NMP and filtered off in the same manner. An operation of adding the obtained solid to 70 liters of ion-exchanged water, stirring the mixture at 70°C for 30 minutes, and then filtering the mixture with a 80 mesh wire mesh to recover the solid was repeated 3 times in total. The obtained solid and 32 g of acetic acid were added to 70 liters of ion-exchanged water, stirred at 70°C for 30 minutes, and then filtered with a 80 mesh wire mesh. The obtained solid was further added to 70 liters of ion-exchanged water, stirred at 70°C for 30 minutes, and then filtered with a 80 mesh wire mesh to recover the solid. The solid thus obtained was dried at 120°C under nitrogen flow to obtain a dried polyphenylene sulfide resin. A mass average molecular weight was 48600.

< Thermoplastic Resin Having No Electron Donating Group >

Polyethylene terephthalate (PET): F20-S produced by Toray Industries, Inc., melting point: 255°C.

< Nickel Compound (B1) >

(B1-1) Nickel (II) iodide hexahydrate (produced by FUJIFILM Wako Pure Chemical Corporation)
(B1-2) Nickel (II) formate dihydrate (produced by FUJIFILM Wako Pure Chemical Corporation)
(B1-3) 3% by mass aqueous solution of nickel (II) iodide hexahydrate.

< Copper Compound (B2) Having Complete Decomposition Temperature of 400°C or Higher >

(B2-1) Copper (II) chloride anhydride (produced by FUJIFILM Wako Pure Chemical Corporation)
(B2-2) Copper (I) iodide anhydride (produced by FUJIFILM Wako Pure Chemical Corporation)
(B2-3) 3% by mass aqueous solution of copper (II) chloride dihydrate.

< (B'2) Copper Compound Having Complete Decomposition Temperature of Lower Than 400°C >

(B'2-1) Copper (II) nitrate trihydrate (produced by FUJIFILM Wako Pure Chemical Corporation)

< Amine compound (C) >

(C-1) Phenothiazine (produced by FUJIFILM Wako Pure Chemical Corporation)
(Molecular weight: 199, boiling point: 371°C)
(C-2) p-phenylenediamine (produced by FUJIFILM Wako Pure Chemical Corporation)
(Molecular weight: 108, boiling point: 267°C)
(C-3) Octylamine (produced by FUJIFILM Wako Pure Chemical Corporation)
(Molecular weight: 129, boiling point: 176°C)
(C-4) Amine-modified elastomer Tuftec MP 10 (produced by Asahi Kasei Corporation)
(Molecular weight > 5000, boiling point > 300°C)

< Fibrous Filler (D) >

(D-1) Carbon fiber "TORAYCA (registered trademark)" cut fiber TV 14-006 (produced by Toray Industries, Inc.)
(D-2) Discontinuous carbonfiber mat

A carbon fiber chopped fiber obtained by cutting "TORAYCA (registered trademark)" T700S-12k produced by Toray Industries, Inc. to a length of 20 mm was introduced into a carding device, and the web coming out was cross-lapped to form a sheet-like carbon fiber sheet having a basis weight of 100 g/m$^2$. The obtained carbon fiber sheet was placed in a press machine, and pressurized at a pressure of 20 MPa for 5 seconds to obtain a discontinuous carbonfiber mat.

(D-3) Carbonfiber bundle ("TORAYCA (registered trademark)" T700S-12k produced by Toray Industries, Inc.)

< Method for Producing Thermoplastic Resin Composition >

Among the raw materials shown in each of examples and comparative examples of Table 1, Table 2, Table 4, and Table 5, raw materials excluding carbon fibers (D-1) were dry-blended with a composition shown in Table 1, Table 2, Table 4, and Table 5, and supplied from a main feeder of a twin screw extruder (TEX 30$\alpha$ produced by The Japan Steel Works, Ltd.), the carbon fibers (D-1) were supplied from a side feeder (one installed at a position of 0.35 when viewed from upper stream side in a case where the total length of the screw was 1.0), and melt-kneaded at a cylinder

temperature of 320°C (380°C in Example 11 and Comparative Example 9, 300°C in Example 12 and Comparative Examples 10 to 12) and a screw rotation speed of 200 rpm, strings discharged from a die were immediately cooled in a water bath, pelletized by a strand cutter, and vacuum-dried at 120°C (170°C in Example 11 and Comparative Example 9, 80°C in Example 12 and Comparative Examples 10 to 12) for 12 hours.

< Method for Producing Discontinuous Fiber Reinforced Plastic Base Impregnated with Thermoplastic Resin Composition >

Among the raw materials described in examples and comparative examples in Table 3 and Table 6, raw materials excluding the discontinuous carbonfiber mat (D-2) were dry-blended with the composition shown in the table, charged into a hopper of a uniaxial extruder heated to 320°C, melt-kneaded, and then extruded into a film from a film die to prepare a film having a thickness of 100 μm.

The winding direction of the discontinuous carbonfiber mat (D-2) was set to 0°, 12 discontinuous fiber mats were stacked so as to be (0°/90°/0°/90°/0°/90°) s, and then thermoplastic resin composition film was further laminated in the laminated discontinuous carbonfiber mat so that the mass ratio of the carbon fiber and the thermoplastic resin composition film was 50: 50, then the whole was sandwiched between stainless steel plates, preheated at 350°C for 90 seconds, and then hot-pressed at 350°C for 180 seconds while a pressure of 2.0 MPa was applied. Then, the fiber reinforced plastic base was cooled to 50°C in a pressed state to obtain a discontinuous fiber reinforced plastic base having a thickness of 2 mm.

< Method for Producing Continuous Fiber Reinforced Plastic Base Impregnated with Thermoplastic Resin Composition >

Among the raw materials described in examples and comparative examples in Table 3 and Table 6, the raw materials excluding carbonfiber bundles (D-3) were dry-blended with the composition shown in the table, charged into a hopper of a uniaxial extruder heated to 320°C, and melt-kneaded, then the strings discharged from the die were immediately cooled in a water bath, pelletized by a strand cutter, and vacuum-dried at 120°C for 12 hours. 16 bobbins each wound with the carbonfiber bundles (D-3) were prepared, and the carbonfiber bundles were each continuously fed out from the bobbin through a thread path guide. The continuously fed carbonfiber bundles were impregnated with resin composition pellets obtained by the method described above and supplied in a fixed amount from a filled feeder in an impregnation die heated to 320°C. The carbon fiber impregnated with the resin composition in the impregnation die was continuously withdrawn from the nozzle of the impregnation die at a withdrawal rate of 1 m/min using a drawing roll. The drawn carbonfiber bundle passed through a cooling roll to cool and solidify the resin composition, and was wound up into a winder as a continuous fiber reinforced plastic base. The continuous fiber reinforced plastic base was obtain under the conditions that in the obtained fiber reinforced plastic base, a thickness was 0.08 mm, a width was 50 mm, reinforcing fiber directions were arranged in one direction, and a volume content was 60%. Further, 6 continuous fiber reinforced plastic bases each having a thickness of 0.08 mm were stacked in the same direction, and pressed with a press machine heated to 320°C at a pressure of 15 bar for 20 minutes to obtain a laminate of continuous fiber reinforced plastic bases each having a thickness of 0.45 mm.

< Method for Evaluating Thermoplastic Resin Composition >

Evaluation methods in examples and comparative examples will be described.

(1) Transition Metal Content in Thermoplastic Resin Composition

The thermoplastic resin composition pellet was ashificated, and the ashificated matter was subjected to heat sealed decomposition with sulfuric acid and hydrofluoric acid, and then dissolved in aqua regia, and the obtained constant solution was measured by ICP-MS (inductively coupled plasma mass spectrometry: ELEMENT produced by Thermo Quest).

(2) Complete Decomposition Temperature of Copper Compound

Approximately 10 mg of a copper compound alone was weighed, and held at 50°C for 1 minute under nitrogen flow using a thermal mass spectrometer (TGA 7 produced by PerkinElmer, Inc.), then the temperature was raised from 50°C to 500°C at a temperature raising rate of 10°C/min, and a mass reduction when the mass at 50°C was taken as 100% was measured.

As an example, the results of thermogravimetric analysis of (B2-1) copper (II) chloride anhydride under the above conditions are illustrated in Fig. 1. Similarly, the results of thermogravimetric analysis of (B'2-1) copper (II) nitrate

trihydrate under the above conditions are illustrated in Fig. 2. A horizontal axis represents a temperature T (°C), and a vertical axis represents a mass fraction W (%). In the copper (II) chloride anhydride, chlorine corresponding to 52.7% by mass calculated from the molecular weight of the copper (II) chloride anhydride volatilizes. The complete decomposition temperature is defined as a temperature at which the weight loss rate reaches 90% of the mass of the compound component excluding the copper of the copper compound. Therefore, the temperature at which a weight loss of 47% by mass, which is 90% of 52.7% by mass, is observed is the complete decomposition temperature of the copper (II) chloride anhydride. In the copper (II) chloride anhydride, a weight reduction of 47% by mass was not observed at a measurement temperature of up to 500°C. Therefore, the complete decomposition temperature of copper (II) chloride anhydride is 500°C or higher. On the other hand, in the copper (II) nitrate trihydrate, the trihydrate corresponding to 22.3% by mass calculated from the molecular weight out of the total mass is first volatilized (symbol 1 in Fig. 2), and the nitric acid corresponding to 51.3% by mass is volatilized (symbol 2 in Fig. 2). The complete decomposition temperature is defined as a temperature at which the weight loss rate reaches 90% of the mass of the compound component excluding the copper of the copper compound. The content of the part of copper (II) nitrate trihydrate excluding copper is 73.6% by mass, and therefore 90% thereof is 66% by mass. Therefore, the temperature at which a weight loss of 66% by mass is observed is the complete decomposition temperature of the copper (II) nitrate trihydrate. From Fig. 2, the complete decomposition temperature of copper (II) nitrate trihydrate is 282°C.

(3) Measurement of melt viscosity before and after heating

The thermoplastic resin composition pellets were freeze-pulverized/vacuum-dried and used as a sample for melt viscosity measurement before heating. The vacuum drying condition is 120°C (170°C in Example 11 and Comparative Example 9, and 80°C in Example 12 and Comparative Examples 10 to 12) for 12 hours. In addition, about 50 mg of a sample freeze-pulverized/vacuum-dried on a 25 mm × 7 mm × 7 mm microaluminum dish (produced by Alpha Purchase) was placed flat so as to have a depth of about 300 μm, and heated in an electric furnace under the air at the melting point of the thermoplastic resin (A) +70°C for 30 minutes, and the heated sample freeze-pulverized/vacuum-dried was used as a sample for melt viscosity measurement after heating. The closer the melt viscosity retention rate before and after heating is to 100%, the better the heat stability is. The melt viscosity measurement conditions are as follows.

Apparatus: Rheometer (Physica MCR 501 produced by Anton Paar)
Atmosphere: Under nitrogen flow
Measurement temperature: (A) Melting point of thermoplastic resin + 70°C

Angular frequency 6.28rad/sec

Sample amount: 0.7g
Melt viscosity: Complex viscosity after retention for 5 minutes under the above conditions.

(4) Tensile Properties Before And After Heating

The above thermoplastic resin composition pellets were freeze-pulverized/vacuum-dried, and injection-molded using a small injection molding machine (Haake MiniJetPro produced by thermo fisher scientific) under the conditions of a cylinder temperature of 350°C (380°C in Example 11 and Comparative Example 9, and 300°C in Example 12 and Comparative Examples 10 to 12) and a mold temperature of 120°C (170°C in Example 11 and Comparative Example 9, and 80°C in Example 12 and Comparative Examples 10 to 12) to obtain a dumbbell of the ISO 527-2-5A standard, thereby obtaining a molded article for a tensile test before heating. In addition, about 50 mg of a sample freeze-pulverized/vacuum-dried on a 25 mm × 7 mm × 7 mm microaluminum dish (produced by Alpha Purchase) was placed flat so as to have a depth of about 300 μm, and heated in an electric furnace under the air at the melting point of the thermoplastic resin (A) +70°C for 30 minutes, and the heated sample freeze-pulverized/vacuum-dried was molded under the molding conditions described above to obtain a molded article for tensile test after heating. The closer the tensile strength retention rate and the tensile breaking elongation retention rate before and after heating are to 100%, the better the heat stability is. The tensile test conditions are as follows.

Apparatus: Universal testing machine (Autograph AG-20 kNX produced by Shimadzu Corporation)

Atmosphere: 23°C × 50%RH
Length between chucks: 50mm
Gauge length: 20mm
Tensile rate: 5 mm/min.

(5) Measurement of Carboxyl Group Content

The carboxyl group content in the polyarylenesulfide (A1) and the polyarylenesulfide (A1) in the thermoplastic resin composition was calculated using a Fourier transform infrared spectrometer (hereinafter, abbreviated as FT-IR). First, benzoic acid as a standard substance was measured by FT-IR, and the absorption intensity (b1) of a peak at 3066 $cm^{-1}$, which is the absorption of a C-H bond of a benzene ring, and the absorption intensity (c1) of a peak at 1704 $cm^{-1}$, which is the absorption of a carboxyl group, were read to determine the carboxyl group content (U1) per unit of benzene ring, (U1) = (c1)/[(b1)/5]. Next, the polyarylenesulfide (A1) and the thermoplastic resin composition were melt-pressed at 320°C for 1 minute and then rapidly cooled to obtain an amorphous film, and the obtained amorphous film was subjected to FT-IR measurement. The absorption intensity (b2) at 3066 $cm^{-1}$ and the absorption intensity (c2) at 1704 $cm^{-1}$ were read to determine the carboxyl group content (U2) per unit of a benzene ring, (U2) = (c2)/[(b2)/4]. The carboxyl group content (A1) per 1 g of the polyarylenesulfide and the thermoplastic resin composition was calculated from the following equation.

The carboxyl group content in polyarylenesulfide (A1) and thermoplastic resin composition (μmol/g)

$$= (U2)/(U1)/108.161 \times 1000000$$

(6) Welding test

The discontinuous fiber reinforced plastic base obtained by the above production method was cut into a size of 300 mm × 400 mm × 2 mm, preheated until the center temperature of the base reached 350°C, then placed on a press board heated to 190°C, and pressed at 10 MPa for 30 seconds to be stamping-molded, thereby obtaining a discontinuous fiber-reinforced resin molded body, and welding was performed using the fiber-reinforced resin molded body.

The discontinuous fiber-reinforced resin molded bodies (length: 100 mm, width: 25 mm, thickness: 2 mm) having the same type were stacked as illustrated in Fig. 3, and welding was performed by vibration welding while a surface pressure of 1.6 MPa was applied to a surface having a width of 25 mm and a welding margin of 12.5 mm.

(7) Tensile Test of Welded Body

The shear strength was measured by a lap shear test (shear test) according to JIS K 6851. The bond strength was quantitatively evaluated by measuring the tensile strength when tension is applied in directions opposite to each other so as to apply a shear load and breakage or deformation (for example, interfacial fracture) of a predetermined amount or more occurs in a bond portion.

(8) Formability

A laminate of the continuous fiber reinforced plastic bases obtained by the above production method was cut into a thickness of 0.45 mm, a width of 13 mm, and a length of 125 mm, and a laminate (symbol 6 in Fig. 4) preheated until the center temperature of the base reached 340°C was put between molds including an upper mold (symbol 4 in Fig. 4) and a lower mold (symbol 5 in Fig. 4) having an uneven shape as illustrated in Fig. 4 using a press machine (SA 303 produced by TESTER SANGYO CO., LTD.) temperature-controlled to 240°C, maintained at a pressure at 1.5 MPa for 10 minutes, transferred together with the molds to the press machine (SA 303 produced by TESTER SANGYO CO., LTD.) temperature-controlled to 30°C, and cooled to obtain a molded article deformed along the shape of the mold. The depth of the uneven part of the molded article (symbol 3 illustrated in Fig. 4) was measured with a caliper. Next, a silicone-based resin was applied to one mold having the uneven shape, the mold was left to stand for 24 hours in an atmosphere of 23°C to be cured, and then the depth of the uneven shape made of the silicone-based resin was measured with a caliper. A value obtained by dividing the depth of the uneven part of the strip-shaped molded article by the depth of the uneven part of the silicone-based resin was defined as a transcription rate, and the uneven shape of 0.9 or more

was defined as A, a uneven shape of 0.7 or more and less than 0.9 was defined as B, and a uneven shape of less than 0.7 was defined as C.

[Examples 1 to 12, Comparative Examples 1 to 12]

[Table 1-1]

| | | | Example 1 | Example 2 | Example 3 | Example 4 | Example 5 | Example 6 |
|---|---|---|---|---|---|---|---|---|
| Resin composition | Thermoplastic resin (A) | Type | A-1 | A-1 | A-1 | A-1 | A-1 | A-1 |
| | | Parts by mass | 100 | 100 | 100 | 100 | 100 | 100 |
| | Nickel compound (B1) | Type | B1-1 | B1-1 | B1-1 | B1-1 | B1-1 | B1-3 |
| | | Parts by mass | 0.057 | 1 | 10 | 1 | 1 | 33.3 |
| | Copper compound (B2) having complete decomposition temperature of 400°C or higher | Type | B2-1 | B2-1 | B2-1 | B2-1 | B2-1 | B2-3 |
| | | Parts by mass | 0.4 | 0.4 | 0.4 | 0.017 | 4 | 16.7 |
| | Fibrous filler (D) | Type | - | - | - | - | - | - |
| | | Parts by mass | - | - | - | - | - | - |
| Content | Nickel content in resin composition (per 100 parts by mass of thermoplastic resin (A)) | Parts by mass | 0.008 | 0.14 | 1.4 | 0.14 | 0.14 | 0.14 |
| | Copper content in resin composition (per 100 parts by mass of thermoplastic resin (A)) | Parts by mass | 0.19 | 0.19 | 0.19 | 0.008 | 1.9 | 0.19 |
| Decomposition temperature | Complete decomposition temperature of copper compound | °C | >500 | >500 | >500 | >500 | >500 | >500 |
| Heat stability | Melt viscosity of resin composition | Pa · s | 77 | 78 | 85 | 78 | 81 | 77 |
| | Melt viscosity of resin composition after heating at melting point of thermoplastic resin (A) + 70°C for 30 minutes | Pa · s | 5100 | 1900 | 3400 | 4700 | 3200 | 1320 |
| | Melt viscosity retention rate before and after heating | % | 6623 | 2436 | 4000 | 6026 | 3951 | 1714 |

(continued)

| | | | | Example 1 | Example 2 | Example 3 | Example 4 | Example 5 | Example **6** |
|---|---|---|---|---|---|---|---|---|---|
| Tensile properties | Before heating | Tensile strength | MPa | 79 | 80 | 82 | 80 | 82 | 80 |
| | | Tensile breaking elongation | % | 7.9 | 8.1 | 7.6 | 8.0 | 7.7 | 8.1 |
| | After heating at malting point of thermoplastic resin (A) + 70°C for 30 minutes | Tensile strength | MPa | 71 | 78 | 77 | 71 | 76 | 81 |
| | | Tensile breaking elongation | % | 5.9 | 7.7 | 6.9 | 6.1 | 7.1 | 8.1 |
| | Before and after heating | Tensile strength retention rate | % | 90 | 98 | 94 | 89 | 93 | 101 |
| | | Tensile breaking elongation retention rate | % | 75 | 95 | 91 | 76 | 92 | 100 |

[Table 1-2]

| | | | Example 7 | Example 8 | Example 10 | Example 11 | Example 12 |
|---|---|---|---|---|---|---|---|
| Resin composition | Thermoplastic resin (A) | Type | A-1 | A-1 | A-1 | A-2 | A-3 |
| | | Parts by mass | 100 | 100 | 100 | 100 | 100 |
| | Nickel compound (B1) | Type | B1-2 | B1-1 | B1-1 | B1-1 | B1-1 |
| | | Parts by mass | 0.5 | 1 | 1 | 1 | 1 |
| | Copper compound (B2) having complete decomposition temperature of 400°C or higher | Type | B2-1 | B2-2 | B2-1 | B2-1 | B2-1 |
| | | Parts by mass | 0.4 | 0.5 | 0.4 | 0.4 | 0.4 |
| | Fibrous filler (D) | Type | - | - | D-1 | - | - |
| | | Parts by mass | - | - | 43 | - | - |
| Content | Nickel content in resin composition (per 100 parts by mass of thermoplastic resin (A)) | Parts by mass | 0.16 | 0.14 | 0.14 | 0.14 | 0.14 |
| | Copper content in resin composition (per 100 parts by mass of thermoplastic resin (A)) | Parts by mass | 0.19 | 0.17 | 0.19 | 0.19 | 0.19 |
| Decomposition temperature | Complete decomposition temperature of copper compound | °C | >500 | >500 | >500 | >500 | >500 |
| Heat stability | Melt viscosity of resin composition | Pa · s | 79 | 78 | 3810 | 195 | 55 |
| | Melt viscosity of resin composition after heating at melting point of thermoplastic resin (A) + 70°C for 30 minutes | Pa · s | 3300 | 1700 | 66700 | 360 | 52 |
| | Melt viscosity retention rate before and after heating | % | 4177 | 2179 | 1751 | 185 | 95 |

(continued)

| | | | | Example 7 | Example 8 | Example 10 | Example 11 | Example 12 |
|---|---|---|---|---|---|---|---|---|
| Tensile properties | Before heating | Tensile strength | MPa | 79 | 81 | 221 | 88 | 80 |
| | | Tensile breaking elongation | % | 7.9 | 8.2 | 1.2 | 28 | 25.3 |
| | After heating at melting point of thermoplastic resin (A) + 70°C for 30 minutes | Tensile strength | MPa | 75 | 80 | 229 | 87 | 81 |
| | | Tensile breaking elongation | % | 6.9 | 7.7 | 1.3 | 23.0 | 23.2 |
| | Before and after heating | Tensile strength retention rate | % | 95 | 99 | 104 | 99 | 101 |
| | | Tensile breaking elongation retention rate | % | 87 | 94 | 108 | 82 | 92 |

[Table 2-1]

| | | | Comparative Example 1 | Comparative Example 2 | Comparative Example 3 | Comparative Example 5 | Comparative Example 6 | Comparative Example 7 |
|---|---|---|---|---|---|---|---|---|
| Resin composition | Thermoplastic resin (A) | Type | A-1 | A-1 | A-1 | A-1 | A-1 | A-1 |
| | | Parts by mass | 100 | 100 | 100 | 100 | 100 | 100 |
| | Thermoplastic resin having no electron donating group | Type | - | - | - | - | - | - |
| | | Parts by mass | - | - | - | - | - | |
| | Nickel compound (B1) | Type | B1-1 | B1-1 | B1-1 | B1-1 | - | - |
| | | Parts by mass | 0.006 | 30 | 1 | 1 | - | - |
| | Copper compound (B2) having complete decomposition temperature of 400°C or higher | Type | B2-1 | B2-1 | B2-1 | B2-1 | - | - |
| | | Parts by mass | 0.4 | 0.4 | 0.002 | 12 | - | - |
| | (B'2) Copper Compound Having Complete Decomposition Temperature of Lower Than 400°C | Type | - | - | - | - | - | - |
| | | Parts by mass | - | - | - | - | - | - |
| | Fibrous filler (D) | Type | - | - | - | - | - | D-1 |
| | | Parts by mass | - | - | - | - | - | 43 |

(continued)

| | | | Comparative Example 1 | Comparative Example 2 | Comparative Example 3 | Comparative Example 5 | Comparative Example 6 | Comparative Example 7 |
|---|---|---|---|---|---|---|---|---|
| Content | Nickel content in resin composition (per 100 parts by mass of thermoplastic resin (A)) | Parts by mass | 0.0008 | 4.2 | 0.14 | 0.14 | - | - |
| | Copper content in resin composition (per 100 parts by mass of thermoplastic resin (A)) | Parts by mass | 0.19 | 0.19 | 0.0009 | 5.67 | - | - |
| Decomposition temperature | Complete decomposition temperature of copper compound | °C | >500 | >500 | >500 | >500 | - | - |
| Heat stability | Melt viscosity of resin composition | Pa · s | 77 | 95 | 76 | 88 | 78 | 3700 |
| | Melt viscosity of resin composition after heating at melting point of thermoplastic resin (A) + 70°C for 30 minutes | Pa · s | 13100 | 11200 | 7300 | 7800 | 15200 | 256300 |
| | Melt viscosity retention rate before and after heating | % | 17013 | 11789 | 9605 | 8864 | 19487 | 6927 |

(continued)

| | | | | Comparative Example 1 | Comparative Example 2 | Comparative Example 3 | Comparative Example 5 | Comparative Example 6 | Comparative Example 7 |
|---|---|---|---|---|---|---|---|---|---|
| Tensile properties | Before heating | Tensile strength | MPa | 76 | 77 | 77 | 77 | 79 | 220 |
| | | Tensile breaking elongation | % | 8.0 | 7.1 | 8.1 | 7.0 | 8.2 | 1.2 |
| | After heating at melting point of thermoplastic resin (A) + 70°C for 30 minutes | Tensile strength | MPa | 69 | 70 | 70 | 70 | 66 | 129 |
| | | Tensile breaking elongation | % | 2.8 | 3.1 | 4.0 | 4.1 | 2.2 | 0.3 |
| | Before and after heating | Tensile strength retention rate | % | 91 | 91 | 91 | 91 | 84 | 59 |
| | | Tensile breaking elongation retention rate | % | 35 | 44 | 49 | 59 | 27 | 25 |

[Table 2-2]

| | | | Comparative Example 8 | **Comparative** Example 9 | Comparative Example 10 | Comparative Example 11 | Comparative Example 12 |
|---|---|---|---|---|---|---|---|
| Resin composition | Thermoplastic resin (A) | Type | A-1 | A-2 | A-3 | - | - |
| | | Parts by mass | 100 | 100 | 100 | - | - |
| | Thermoplastic resin having no electron donating group | Type | - | - | - | PET | PET |
| | | Parts by mass | - | - | - | 100 | 100 |
| | Nickel compound (B1) | Type | B1-1 | - | - | - | B1-1 |
| | | Parts by mass | 1 | - | - | - | 1 |
| | Copper compound (B2) having complete decomposition temperature of 400°C or higher | Type | - | - | - | - | B2-1 |
| | | Parts by mass | - | - | - | - | 0.4 |
| | (B'2) Copper Compound Having Complete Decomposition Temperature of Lower Than 400°C | Type | B'2-1 | - | - | - | - |
| | | Parts by mass | 0.5 | - | - | - | - |
| | Fibrous filler (D) | Type | - | - | - | - | - |
| | | Parts by **mass** | - | - | - | - | - |

(continued)

| | | | | Comparative Example 8 | **Comparative** Example 9 | Comparative Example 10 | Comparative Example 11 | Comparative Example 12 |
|---|---|---|---|---|---|---|---|---|
| Content | Nickel content in resin composition (per 100 parts by mass of thermoplastic resin (A)) | | Parts by **mass** | 0.14 | - | - | - | 0.14 |
| | Copper content in resin composition (per 100 parts by mass of thermoplastic resin (A)) | | Parts by mass | 0.13 | - | - | - | 0.19 |
| **Decomposi**tion temperature | Complete decomposition temperature of copper compound | | °C | 280 | - | - | - | >500 |
| Heat stability | Melt viscosity of resin composition | | Pa · s | 75 | 192 | 55 | 60 | 62 |
| | Melt viscosity of resin composition after heating at melting point of thermoplastic resin (A) + 70°C for 30 minutes | | Pa · s | 7350 | 730 | 25 | 10 | 11 |
| | Melt viscosity retention rate before and after heating | | % | **9800** | 380 | 45 | 17 | 18 |
| Tensile properties | Before heating | Tensile strength | MPa | 77 | 88 | 80 | 78 | 78 |
| | | Tensile breaking elongation | % | 7.9 | 28 | 24.3 | 36.9 | 31.9 |
| | After heating at melting point of thermoplastic resin (A) + 70°C for 30 minutes | Tensile strength | MPa | 70 | 87 | 68 | 31 | 34 |
| | | Tensile breaking elongation | % | 3.9 | 16.0 | 5.9 | 3.4 | 3.2 |
| | Before and after heating | Tensile strength retention rate | % | 91 | 99 | 85 | 40 | 44 |
| | | Tensile breaking elongation retention rate | % | 49 | 57 | 24 | 9 | 10 |

Comparison between Examples 1 to 12 and Comparative Examples 1 to 12 shows that when specific amounts of the nickel compound (B1) and the copper compound (B2) are blended with the thermoplastic resin (A) having an electron donating group, the heat stability and the mechanical properties are excellent.

Comparison between Example 2 and Comparative Example 8 shows that when the complete decomposition temperature of the copper compound is 400°C or higher, the heat stability and the uneven part mechanical properties are excellent.

Comparison between comparative Example 11 and Comparative Example 12 shows that in the thermoplastic resin having no electron donating group, even when the nickel compound (B1) and the copper compound (B2) are blended in specific amounts, the effect of improving the heat stability and the mechanical properties is not obtained.

Comparison between Example 2 and Example 6 shows that the nickel compound (B1) and the copper compound (B2) are more excellent in the heat stability and the mechanical properties when added as an aqueous solution than when added as a solid. It is considered that the nickel compound (B1) and the copper compound (B2) are finely dispersed in the thermoplastic resin composition.

[Examples 13 to 16, Comparative Examples 13 and 14]

[Table 3]

| | | | Example 13 | Comparative Example 13 | Example 14 | Example 15 | Example 16 | Comparative Example 14 |
|---|---|---|---|---|---|---|---|---|
| Resin composition | Thermoplastic resin (A) | Type | A-1 | A-1 | A-1 | A-1 | A-1 | A-1 |
| | | Parts by mass | 100 | 100 | 100 | 100 | 100 | 100 |
| | Nickel compound (B1) | Type | B1-1 | - | B1-1 | B1-1 | B1-1 | - |
| | | Parts by mass | 1 | - | 1 | 0.057 | 1 | - |
| | Copper compound (B2) having complete decomposition temperature of 400°C or higher | Type | B2-1 | - | B2-1 | B2-1 | B2-1 | - |
| | | Parts by mass | 0.4 | - | 0.4 | 0.4 | 0.017 | - |
| | Fibrous filler (D) | Type | D-2 | D-2 | D-3 | D-3 | D-3 | D-3 |
| | | Parts **by** mass | 101.5 | 100 | 195 | 195 | 195 | 195 |
| Content | Nickel content in resin composition (per 100 parts by mass of thermoplastic resin (A)) | Parts **by** mass | 0.14 | - | 0.14 | 0.008 | 0.14 | - |
| | Copper content in resin composition (per 100 parts by mass of thermoplastic resin (A)) | | 0.19 | - | 0.19 | 0.19 | 0.008 | - |
| Decomposition temperature | Complete decomposition temperature of copper compound | °C | >500 | - | >500 | >500 | >500 | - |
| Welding | Tensile shear teat | MPa | 31.2 | 3.5 | - | - | - | - |
| | Fracture Form | - | Base material fracture | Interfacial fracture | - | - | - | - |
| Formability | Transcription rate | - | - | - | A | B | B | C |

Comparison between Example 13 and Comparative Example 13 shows that when the specific amounts of the nickel compound (B1) and the copper compound (B2) are blended in the thermoplastic resin, the welding strength is excellent. This is considered to be because oxidative deterioration of the surface of the discontinuous fiber reinforced plastic base was possibly suppressed.

Comparison between Examples 14 to 16 and Comparative Example 14 shows that when the specific amounts of the nickel compound (B1) and the copper compound (B2) are blended in the thermoplastic resin, the formability is excellent. This is considered to be because thickening associated with oxidative deterioration of the continuous fiber reinforced plastic base was possibly suppressed.

[Examples 17 to 25, Comparative Examples 15 to 23]

[Table 4-1]

| | | | Example 17 | Example 18 | Example 19 | Example 20 | Example 21 |
|---|---|---|---|---|---|---|---|
| Resin composition | Polyarylenesulfide (A1) | Type | A-1 | A-1 | A-1 | A-1 | A-1 |
| | | Parts by mass | 100 | 100 | 100 | 100 | 100 |
| | Nickel compound (B1) | Type | B1-1 | B1-1 | B1-1 | B1-1 | B1-1 |
| | | Parts by mass | 0.027 | 0.36 | 10.6 | 0.36 | 0.36 |
| | Copper compound (B2) | Type | - | - | - | - | - |
| | | Parts by mass | - | - | - | - | - |
| | Amine compound (C) | Type | C-1 | C-1 | C-1 | C-1 | C-1 |
| | | Parts by mass | 1 | 1 | 1 | 0.01 | 5 |
| | Fibrous filler (D) | Type | - | - | - | - | - |
| | | Parts by mass | - | - | - | - | - |
| Content | Nickel content in resin composition (per 100 parts by mass of thermoplastic resin (A)) | Parts by mass | 0.004 | 0.05 | 1.48 | 0.05 | 0.05 |
| | Copper content in resin composition (per 100 parts by mass of thermoplastic resin (A)) | Parts by mass | - | - | - | - | - |
| Reaction rate | Carboxyl group blocking rate | % | 40 | 60 | 55 | 35 | 62 |
| Heat stability | Melt viscosity of resin composition | Pa · s | 77 | 78 | 90 | 74 | 85 |
| | Melt viscosity of resin composition after heating at melting point of thermoplastic resin (A) + 70°C for 30 minutes | Pa · s | 4500 | 1700 | 3500 | 4700 | 2800 |
| | Melt viscosity retention rate before and after heating | % | 5844 | 2179 | 3889 | 6351 | 3294 |

(continued)

| | | | | Example 17 | Example 18 | Example 19 | Example 20 | Example 21 |
|---|---|---|---|---|---|---|---|---|
| Tensile properties | Before heating | Tensile strength | MPa | 79 | 80 | 82 | 78 | 79 |
| | | Tensile breaking elongation | % | 8.1 | 8.1 | 7.5 | 7.9 | 7.5 |
| | After heating at melting point of thermoplastic resin (A) + 70°C for 30 minutes | Tensile strength | MPa | 71 | 79 | 77 | 78 | 75 |
| | | Tensile breaking elongation | % | 6.2 | 7.9 | 6.9 | 7.4 | 5.1 |
| | Before and after heating | Tensile strength retention rate | % | 90 | 99 | 94 | 100 | 95 |
| | | Tensile breaking elongation retention rate | % | 77 | 98 | 92 | 94 | 68 |

[Table 4-2]

| | | | Example 22 | Example 23 | Example 24 | Example 25 |
|---|---|---|---|---|---|---|
| Resin composition | Polyarylenesulfide (A1) | Type | A-1 | A-1 | A-1 | A-1 |
| | | Parts by mass | 100 | 100 | 100 | 100 |
| | Nickel compound (B1) | Type | - | B1-1 | B1-1 | BI-2 |
| | | Parts by mass | - | 0.36 | 0.36 | 0.23 |
| | Copper compound (B2) | Type | B2-1 | - | - | - |
| | | Parts by mass | 0.11 | - | - | - |
| | Amino compound (C) | Type | C-1 | C-2 | C-1 | C-2 |
| | | Parts by mass | 1 | 1 | 1 | 1 |
| | Fibrous filler (D) | Type | - | - | D-1 | - |
| | | Parts by mass | - | - | 43 | - |
| Content | Nickel content in resin composition (per 100 parts by mass of thermoplastic resin (A)) | Parts by mass | - | 0.05 | 0.05 | 0.07 |
| | Copper content in resin composition (per 100 parts by mass of thermoplastic resin (A)) | Parts by mass | 0.05 | - | - | - |
| Reaction rate | Carboxyl group blocking rate | % | 62 | 28 | 58 | 28 |
| Heat stability | Melt viscosity of resin composition | Pa · s | 78 | 78 | 3750 | 78 |
| | Melt viscosity of resin composition after heating at melting point of thermoplastic resin (A) + 70°C for 30 minutes | Pa · s | 1600 | 4900 | 65000 | 5100 |
| | Melt viscosity retention rate before and after heating | % | 2051 | 6282 | 1733 | 6538 |

(continued)

| | | | | Example 22 | Example 23 | Example 24 | Example 25 |
|---|---|---|---|---|---|---|---|
| Tensile properties | Before heating | Tensile strength | MPa | 80 | 80 | 223 | 80 |
| | | Tensile breaking elongation | % | 8.1 | 8.1 | 1.2 | 8.1 |
| | After heating at melting point of thermoplastic resin (A) + 70°C for 30 minutes | Tensile strength | MPa | 79 | 70 | 231 | 68 |
| | | Tensile breaking elongation | % | 7.9 | 5.7 | 1.3 | 5.5 |
| | Before and after heating | Tensile strength retention rate | % | 99 | 88 | 104 | 85 |
| | | Tensile breaking elongation retention rate | % | 98 | 70 | 108 | 68 |

[Table 5-1]

| | | | Comparative Example 15 | Comparative Example 16 | Comparative Example 17 | Comparative Example 18 | Comparative Example 19 |
|---|---|---|---|---|---|---|---|
| Resin composition | Polyarylenesulfide (A1) | Type | A-1 | A-1 | A-1 | A-1 | A-1 |
| | | Parts by mass | 100 | 100 | 100 | 100 | 100 |
| | Thermoplastic resin having no electron donating group | Type | - | - | - | - | - |
| | | Parts by mass | - | - | - | - | - |
| | Nickel compound (B1) | Type | B1-1 | B1-1 | B1-1 | B1-1 | - |
| | | Parts by mass | 0.0029 | 64.5 | 0.36 | 0.36 | - |
| | Copper compound (B2) | Type | - | - | - | - | - |
| | | Parts by mass | - | - | - | - | - |
| | Other transition metal compounds | Type | - | - | - | - | Zinc chloride (II) |
| | | Parts by-mass | - | - | - | - | 0.10 |
| | Amine compound (C) | Type | C-1 | C-1 | C-1 | C-1 | C-1 |
| | | Parts by mass | 1 | 1 | 0.004 | 7 | 1 |

(continued)

| | | | | Comparative Example 15 | Comparative Example 16 | Comparative Example 17 | Comparative Example 18 | Comparative Example 19 |
|---|---|---|---|---|---|---|---|---|
| Content | Nickel content in resin composition (per 100 parts by mass of thermoplastic resin (A)) | | Parts by mass | 0.0004 | 9 | 0.05 | 0.05 | - |
| | Copper content in resin composition (per 100 parts by mass of thermoplastic resin (A)) | | Parts by mass | - | - | - | - | - |
| | Zinc content in resin composition (per 100 parts by mass of thermoplastic resin (A)) | | Parts by mass | - | - | - | - | 0.05 |
| Reaction rate | Carboxyl group blocking rate | | % | 20 | 25 | 2 | 61 | 18 |
| Heat stability | Melt viscosity of resin composition | | Pa · s | 78 | 110 | 72 | 64 | 79 |
| | Melt viscosity of resin composition after heating at melting point of thermoplastic resin (A) + 70°C for 30 minutes | | Pa · s | 7300 | 10200 | 7200 | 9800 | 8300 |
| | Melt viscosity retention rate before and after heating | | % | 9359 | 9273 | 10000 | 15312 | 10506 |
| Tensile properties | Before heating | Tensile strength | MPa | 76 | 70 | 77 | 72 | 76 |
| | | Tensile breaking elongation | % | 7.9 | 60 | 8 | 6.5 | 7.9 |
| | After heating at melting point of thermoplastic resin (A) + 70°C for 30 minutes | Tensile strength | MPa | 72 | 58 | 71 | 65 | 69 |
| | | Tensile breaking elongation | % | 4.3 | 2.5 | 3.9 | 2.1 | 4.3 |
| | Before and after heating | Tensile strength retention rate | % | 95 | 83 | 92 | 90 | 91 |
| | | Tensile breaking elongation retention rate | % | 54 | 4 | 49 | 32 | 54 |

[Table 5-2]

| | | | Comparative Example 20 | Comparative Example 21 | Comparative Example 22 | Comparative Example 23 |
|---|---|---|---|---|---|---|
| Resin composition | Polyarylenesulfide (Al) | Type | A-1 | A-1 | - | A-1 |
| | | Parts by mass | 100 | 100 | - | 100 |
| | Thermoplastic resin having no electron donating group | Type | - | - | PET | - |
| | | Parts by mass | - | - | 100 | - |
| | Nickel compound (B1) | Type | B1-1 | B1-1 | B1-1 | B1-1 |
| | | Parts by mass | 0.36 | 0.36 | 0.36 | 0.36 |
| | Copper compound (B2) | Type | - | - | - | - |
| | | Parts by mass | - | - | - | - |
| | Other transition metal compounds | Type | - | - | - | - |
| | | Parts by mass | - | - | - | - |
| | Amine compound (C) | Type | C-3 | C-4 | C-1 | C-4 |
| | | Parts by mass | 1 | 1 | 0.01 | 1 |

(continued)

| | | | | Comparative Example 20 | Comparative Example 21 | Comparative Example 22 | Comparative Example 23 |
|---|---|---|---|---|---|---|---|
| Content | Nickel content in resin composition (per 100 parts by mass of thermoplastic resin (A)) | | Parts by mass | 0.05 | 0.05 | 0.05 | 0.05 |
| | Copper content in resin composition (per 100 parts by mass of thermoplastic resin (A)) | | Parts by mass | - | - | - | - |
| | Zinc content in resin composition (per 100 parts by mass of thermoplastic resin (A)) | | Parts by mass | - | - | - | - |
| Reaction rate | Carboxyl group blocking rate | | % | 15 | 12 | 46 | 1 |
| Heat stability | Melt viscosity of resin composition | | Pa · s | 80 | 150 | 62 | 3680 |
| | Melt viscosity of resin composition after heating at melting point of thermoplastic resin (A) + 70°C for 30 minutes | | Pa · s | 9100 | 16600 | 9 | 261650 |
| | Melt viscosity retention rate before and after heating | | % | 11375 | 11067 | 84 | 7110 |
| Tensile properties | Before heating | Tensile strength | MPa | 80 | 80 | 78 | 220 |
| | | Tensile breaking alongation | % | 8.1 | 8.1 | 34.9 | 1.2 |
| | After heating at melting point of thermoplastic resin (A) + 70°C for 30 minutes | Tensile strength | MPa | 72 | 72 | 34 | 132 |
| | | Tensile breaking alongation | % | 3.0 | 3.0 | 3.2 | 3.0 |
| | Before and after heating | Tensile strength retention rate | % | 90 | 90 | 44 | 60 |
| | | Tensile breaking alongation retention rate | % | 37 | 37 | 9 | 250 |

Comparison between Examples 17 to 25 and Comparative Examples 15 to 23 shows that when the specific amount of the nickel compound (B1) or the copper compound (B2) and the amine compound (C) are blended with the polyarylenesulfide (A1), the heat stability and the mechanical properties are excellent.

[Examples 26 to 29, Comparative Examples 24 and 25]

[Table 6]

| | | | Example 26 | Comparative Example 24 | Example 27 | Example 28 | Example 29 | Comparative Example 25 |
|---|---|---|---|---|---|---|---|---|
| Resin composition | Polyaryloneoulfide (Al) | Type | A-1 | A-1 | A-1 | A-1 | A-1 | A-1 |
| | | Parts by mass | 100 | 100 | 100 | 100 | 100 | 100 |
| | Nickel compound (B1) | Type | B1-1 | - | B1-1 | B1-1 | B1-1 | - |
| | | Parts by mass | 0.36 | - | 0.36 | 0.027 | 0.36 | - |
| | Amine compound (C) | Type | C-1 | - | C-1 | C-1 | C-1 | - |
| | | Parts by mass | 1 | - | 1 | 1 | 0.01 | - |
| | Fibrous filler (D) | Type | D-2 | D-2 | D-3 | D-3 | D-3 | D-3 |
| | | Parts by mass | 101.5 | 100 | 195 | 195 | 195 | 195 |
| Content | Nickel content in resin composition (per 100 parts by mass of thermoplastic resin (A)) | Parts by mass | 0.05 | - | 0.05 | 0.004 | 0.05 | - |
| | Copper content in resin composition (per 100 parts by mass of thermoplastic resin (A)) | Parts by mass | - | - | - | - | - | - |
| Welding | Tensile shear test | MPa | 31.2 | 3.5 | - | - | - | - |
| | Fracture Form | - | Base material fracture | Interfacial fracture | - | - | - | - |
| Formability | Transcription rate | - | - | - | A | B | B | C |

Comparison between Example 26 and Comparative Example 24 shows that when the specific amount of the nickel compound (B1) or the copper compound (B2) and the amine compound (C) are blended with the polyarylenesulfide (A1), the welding strength is excellent. This is considered to be because oxidative deterioration of the surface of the discontinuous fiber reinforced plastic base was possibly suppressed.

Comparison between Examples 27 to 29 and Comparative Examples 24 and 25 shows that when the specific amount of the nickel compound (B1) or the copper compound (B2) and the amine compound (C) are blended with the polyarylenesulfide (A1), the formability is excellent. This is considered to be because thickening associated with oxidative deterioration of the continuous fiber reinforced plastic base was possibly suppressed.

INDUSTRIAL APPLICABILITY

The thermoplastic resin composition of the present invention can be molded by any method such as generally known injection molding, compression molding, or extrusion molding. The thermoplastic resin composition of the present invention can be processed into various electrical and electronic parts, automobile parts, aircraft parts, mechanical parts, and the like, taking advantage of the excellent heat stability and mechanical properties. In addition, the thermoplastic resin composition of the present invention can be used as fibers for clothing, industrial materials, and the like, and films for packaging, magnetic recording, and the like. Furthermore, by using it as a molded article in combination with a fibrous filler, it can be expected to contribute to improvement of fuel efficiency and reduction of global warming gas emission by further weight reduction particularly in automobile and aerospace applications.

DESCRIPTION OF REFERENCE SIGNS

1: Hydrate desorption
2: Nitric acid desorption
3: Depth
4: Upper mold
5: Lower mold
6: Laminate of continuous fiber-reinforced base material

**Claims**

**1.** A thermoplastic resin composition comprising:

a thermoplastic resin (A) having an electron donating group; and
a transition metal compound (B),
wherein the transition metal compound (B) includes a nickel compound (B1) and a copper compound (B2), the copper compound (B2) has a complete decomposition temperature of 400°C or higher, and a nickel content is 0.001 parts by mass or more and 4 parts by mass or less, and a copper content is 0.001 parts by mass or more and 4 parts by mass or less, based on 100 parts by mass of the thermoplastic resin (A) having an electron donating group.

**2.** A thermoplastic resin composition comprising:

a thermoplastic resin (A) having an electron donating group;
a transition metal compound (B); and
an amine compound (C),
wherein a melt viscosity retention rate of the thermoplastic resin (A) having an electron donating group is 90% or more and 7000% or less after being heated at a melting point +70°C for 30 minutes, the thermoplastic resin (A) having an electron donating group includes polyarylenesulfide (A1), the transition metal compound (B) includes a nickel compound (B1) or a copper compound (B2), the copper compound (B2) has a complete decomposition temperature of 400°C or higher, and a transition metal content is 0.001 parts by mass or more and 8 parts by mass or less with respect to 100 parts by mass of the polyarylenesulfide (A1), a content of the amine compound (C) is 0.01 parts by mass or more and 5 parts by mass or less.

**3.** The thermoplastic resin composition according to claim 1 or 2, wherein the copper compound (B2) is copper halide.

**4.** The thermoplastic resin composition according to claim 2 or 3, wherein the polyarylenesulfide (A1) in the thermoplastic resin composition has a COOH group blockade rate represented by Equation (I) of 30% or more.
[Equation 1]

$$\frac{X-Y}{X} \times 100 \quad \ldots \quad (\mathrm{I})$$

(wherein, X represents a carboxyl group content of the polyarylenesulfide (A1), and Y represents a carboxyl group content of the polyarylenesulfide (A1) in the thermoplastic resin composition)

**5.** The thermoplastic resin composition according to any one of claims 2 to 4, wherein the amine compound (C) is a primary and/or secondary amine compound in which a molecular weight is 5000 or less and a boiling point is 200°C or higher.

**6.** The thermoplastic resin composition according to any one of claims 1 to 5, comprising:
a fibrous filler (D) which is 10 parts by mass or more and 400 parts by mass or less with respect to 100 parts by mass of the thermoplastic resin (A) having an electron donating group.

**7.** A fiber reinforced plastic base obtained by impregnating a continuous fibrous filler (D) or a reinforcing fiber base in which a discontinuous fibrous filler (D) is dispersed with the thermoplastic resin composition according to any one of claims 1 to 5.

**8.** A molded article obtained by molding the thermoplastic resin composition according to any one of claims 1 to 6 or the fiber reinforced plastic base according to claim 7.

[Fig 1]

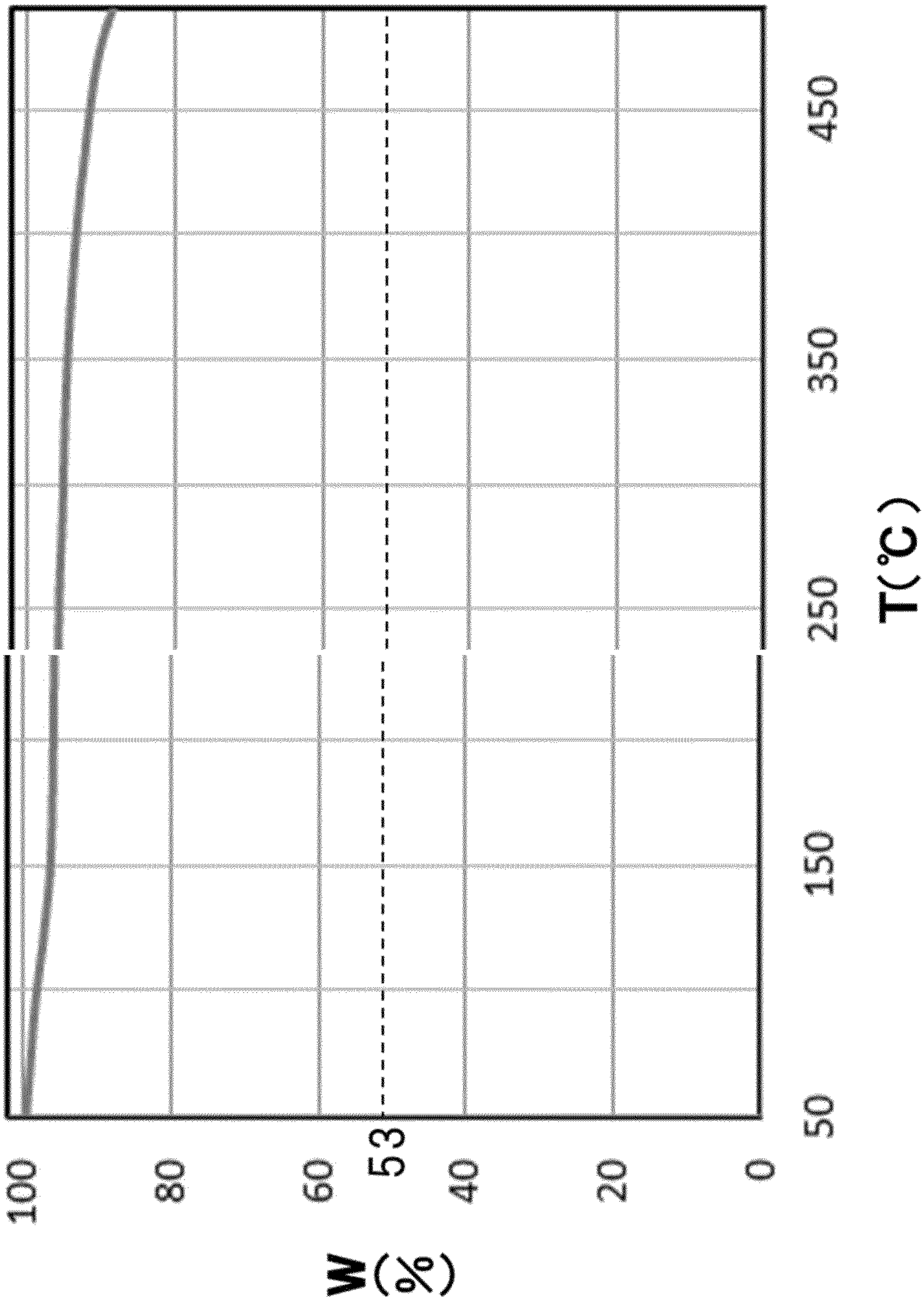

[Fig 2]

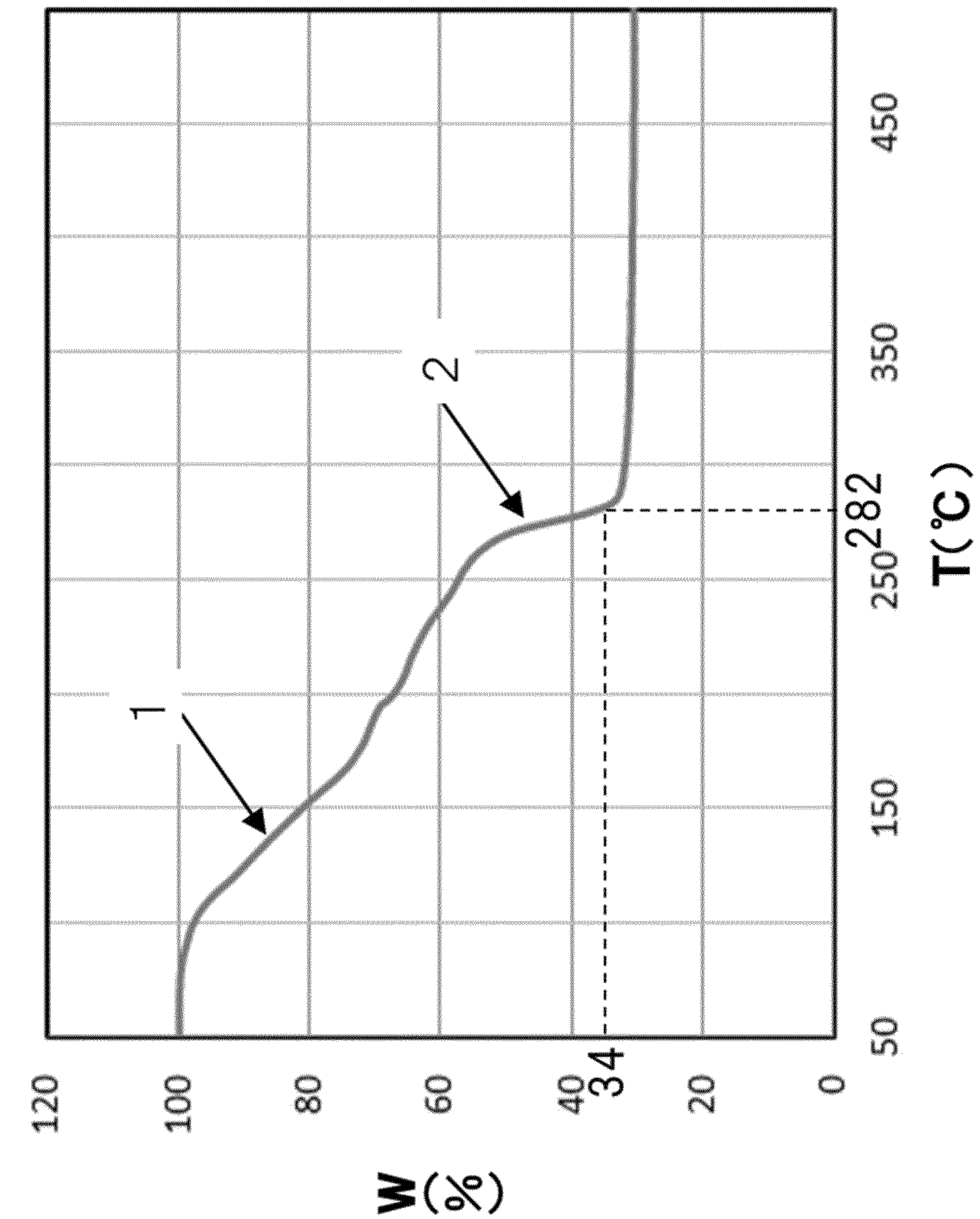

[Fig 3]

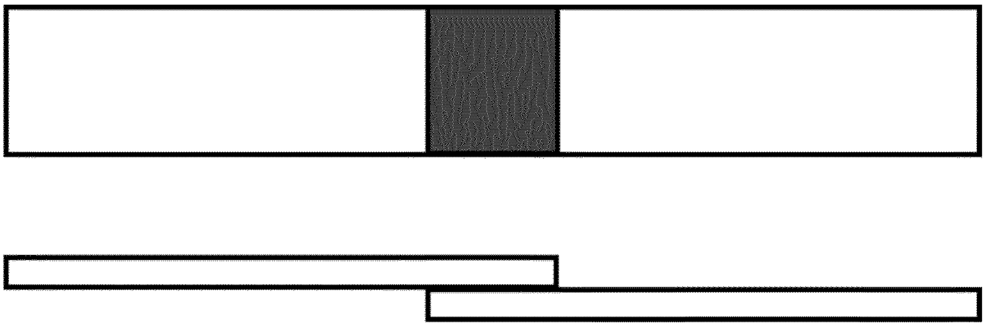

[Fig 4]

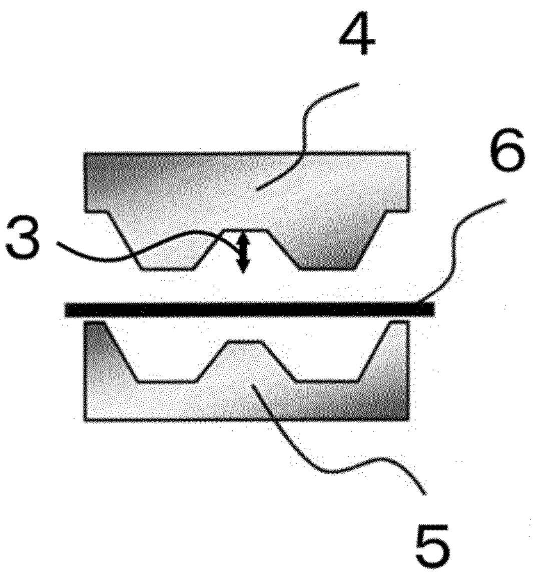

**INTERNATIONAL SEARCH REPORT**

International application No.
PCT/JP2020/034418

A. CLASSIFICATION OF SUBJECT MATTER
C08K 5/17(2006.01)i; C08K 7/02(2006.01)i; C08L 81/02(2006.01)i; C08L 101/02(2006.01)i; C08J 5/04(2006.01)i; C08K 3/105(2018.01)i; C08K 3/11(2018.01)i; C08K 3/16(2006.01)i; C08K 3/24(2006. 01) i
FI: C08L101/02; C08K3/16; C08K3/24; C08K7/02; C08J5/04; C08K3/11; C08K3/105; C08K5/17; C08L81/02

According to International Patent Classification (IPC) or to both national classification and IPC

B. FIELDS SEARCHED

Minimum documentation searched (classification system followed by classification symbols)
C08K3/00-13/08; C08L1/00-101/16; C08J5/04-5/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 6-207103 A (POLYPLASTICS CO., LTD.) 26 July 1994 (1994-07-26) claims, paragraphs [0001]-[0002], [0008]-[0013], examples | 2-6, 8<br>7<br>1 |
| Y | JP 2012-158747 A (TORAY INDUSTRIES, INC.) 23 August 2012 (2012-08-23) claims, paragraphs [0087]-[0109], examples | 7 |
| Y | JP 2016-169276 A (TORAY INDUSTRIES, INC.) 23 September 2016 (2016-09-23) claims, paragraphs [0061]-[0072], examples | 7 |
| A | JP 2018-53196 A (TORAY INDUSTRIES, INC.) 05 April 2018 (2018-04-05) claims, paragraph [0143], examples | 1-8 |
| A | WO 2014/208418 A1 (TORAY INDUSTRIES, INC.) 31 December 2014 (2014-12-31) claims, examples | 1-8 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 November 2020 (17.11.2020) | 24 November 2020 (24.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/034418

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-11382 A (TORAY INDUSTRIES, INC.) 21 January 2016 (2016-01-21) claims, examples | 1-8 |
| A | JP 2010-31080 A (DIC CORPORATION) 12 February 2010 (2010-02-12) claims, examples 14-15 | 1-8 |

Form PCT/ISA/210 (continuation of second sheet) (January 2015)

**INTERNATIONAL SEARCH REPORT**
Information on patent family members

International application no.
PCT/JP2020/034418

| Patent Documents referred in the Report | Publication Date | Patent Family | Publication Date |
|---|---|---|---|
| JP 6-207103 A | 26 Jul. 1994 | (Family: none) | |
| JP 2012-158747 A | 23 Aug. 2012 | US 2013/0295806 A1 claims, paragraphs [0213]-[0233], examples<br>WO 2012/096273 A1<br>EP 2664643 A1<br>CN 103314041 A | |
| JP 2016-169276 A | 23 Sep. 2016 | (Family: none) | |
| JP 2018-53196 A | 05 Apr. 2018 | (Family: none) | |
| WO 2014/208418 A1 | 31 Dec. 2014 | US 2016/0137807 A1 claims, examples<br>JP 2015-28142 A<br>EP 3015509 A1<br>CN 105339431 A | |
| JP 2016-11382 A | 21 Jan. 2016 | (Family: none) | |
| JP 2010-31080 A | 12 Feb. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1163262 A
- JP 2014227367 A
- JP 6207102 A